# EUROPÄISCHE PATENTANMELDUNG

(11) **EP 4 733 896 A1**
(43) Veröffentlichungstag der Anmeldung: **29.04.2026**
(21) Anmeldenummer: 24208019.0
(22) Anmeldetag: 22.10.2024
(51) Int. Cl.: G06F 3/01

(54) **HANDSCHUH, SENSOREINHEIT UND HANDSCHUHSYSTEM AUFWEISEND EINEN HANDSCHUH UND MINDESTENS EINE SENSOREINHEIT**

(71) Anmelder: Mimetik UG (haftungsbeschränkt), 01219 Dresden (DE); Technische Universität Dresden Körperschaft des öffentlichen Rechts, 01069 Dresden (DE)
(72) Erfinder: Tsokalo, Ievgenii, 01219 Dresden (DE); Janik, Jessica, 01219 Dresden (DE)
(74) Vertreter: Raffay & Fleck

(57) **Zusammenfassung**

Die Erfindung betrifft einen Handschuh zur Aufnahme mindestens einer Sensoreinheit und/oder mindestens eines Sensors, eine Sensoreinheit zur Einbringung in eine Öffnung eines, insbesondere erfindungsgemäßen, Handschuhs, einen mit einem erfindungsgemäßen Handschuh verbindbaren und vorzugsweise die Sensoreinheiten aufweisenden Überwurf sowie ein Handschuhsystem mit einem erfindungsgemäßen Handschuh und mindestens einer erfindungsgemäßen Sensoreinheit und vorzugsweise einem erfindungsgemäßen Überwurf. Ferner betrifft die Erfindung ein Verfahren zur Bildung eines, insbesondere erfindungsgemä-ßen, Handschuhsystems, unter Bereitstellung eines erfindungsgemäßen Handschuhs und mindestens einer erfindungsgemäßen Sensoreinheit und bevorzugt eines erfindungsgemä-ßen Überwurfs.

Die einzelnen Bauteile sind dabei insbesondere auf einfache Weise voneinander lösbar ausgestaltet, sodass elektrische und nicht elektrische Bauteile auf einfache Weise, zum Beispiel zur Reining des Textils des Handschuhs getrennt werden können. Insbesondere ist die Sensoreinheit und der Handschuh derart ausgestaltet, dass ein Sensor ortsfest in einer Öffnung des Handschuhs platziert werden kann.

## Beschreibung

Die Erfindung betrifft einen Handschuh zur Aufnahme mindestens einer Sensoreinheit und/oder mindestens eines Sensors, eine Sensoreinheit zur Einbringung in eine Öffnung eines, insbesondere erfindungsgemäßen, Handschuhs sowie ein Handschuhsystem mit einem erfindungsgemäßen Handschuh und mindestens einer erfindungsgemäßen Sensoreinheit. Ferner betrifft die Erfindung ein Verfahren zur Bildung eines, insbesondere erfindungsgemä-ßen, Handschuhsystems, unter Bereitstellung eines erfindungsgemäßen Handschuhs und mindestens einer erfindungsgemäßen Sensoreinheit.

Tragbare elektronische Technologie ist derzeit ein schnell wachsendes Feld. Beispiele für tragbare Technologie sind intelligente Uhren, kontinuierliche medizinische Überwachungsgeräte, Aktivitäts- und Fitnessmonitore sowie Kleidung mit eingebauten Sensoren, die anwendungsbedingte Zustände der Umgebung erfassen. Zu den technischen Kleidungsstücken gehören beispielsweise Virtual-Reality-Kleidungsstücke wie Kopfbedeckungen mit Heads-up-Displays, computergesteuerte Brillen oder verkabelte intelligente Handschuhsysteme. Derartige intelligente Handschuhsysteme werden vor allem in Bereich der "Virtual Reality" bzw. "Augmented Reality" verwendet, wobei jedoch auch eine Anwendung derartige intelligente Handschuhsystem für beispielsweise Industrieanwendungen von Interesse ist. Verfügbare Handschuhsysteme enthalten Bewegungssensoren, die optische Eingabe-/Ausgabegeräte, MEMS-Sensoren (mikroelektromechanische Systeme) oder Miniaturgyroskope aufweisen.

Die im Handel erhältlichen intelligenten Handschuhsysteme sind jedoch in der Regel dick, sperrig, was besonders in industriellen Anwendungen zu Problemen führen kann. Zusätzlich bedingen in Produktionshallen vorherrschende Umgebungseinflüsse weitere Anpassungen bezüglich einer Gestaltung eines solchen Handschuhsystems. Dies betrifft die Robustheit, Tragekomfort und ebenso die Waschbarkeit des Handschuhsystems.

Auch im Bereich der "Virtual Reality" bzw. "Augmented Reality" sind die erhältlichen Handschuhsysteme unzureichend. So wird eben diesen erhältlichen Handschuhsystem häufig ein Mangel an Tragekomfort attestiert und/oder die Handschuhe schränken den Verwender des Handschuhs hinsichtlich der Beweglichkeit der im Handschuh befindlichen Hand signifikant ein. Insbesondere, so vor allem im Bereich von "Action-Simulationen", welche regelmäßig für den Verwender schweißtreibend sind, sind die Handschuhsystem ebendieser Schweißbildung ausgesetzt, sodass auch hier die Möglichkeit der Reinigung des Handschuhsystem einen essenziellen Aspekt darstellt, welchem bei bestehenden Handschuhsystemen zumeist nicht ausreichend Genüge getan ist.

Es besteht insofern das Bedürfnis, ein Handschuhsystem bereitzustellen, welches die Nachteile der bislang erhältlichen Handschuhe ausräumt, insbesondere einen Handschuh bzw. ein Handschuhsystem bereitzustellen, welches auf möglichst einfache Weise gereinigt werden kann, einen hohen Tragekomfort bietet bzw. den Träger des Handschuhs hinsichtlich der Beweglichkeit möglichst gering, vorzugsweise nicht, einschränkt.

Gelöst wird diese Aufgabe durch ein Konzept, welche eine zumindest weitgehende Trennung von technischen Komponenten von sich in Kontakt mit der Haut befindlichen Textilien ermöglicht. Dabei wird zur Lösung der technischen Aufgabe zunächst ein Handschuh nach Anspruch 1 zur Aufnahme mindestens einer Sensoreinheit und/oder mindestens eines Sensors bereitgestellt. Die Ansprüche 2 bis 5 beschreiben ferner vorteilhafte Weiterbildung des erfindungsgemäßen Handschuhs.

Ein erfindungsgemäßer Handschuh zur Aufnahme mindestens einer Sensoreinheit und/oder mindestens eines Sensors weist einen Handinnenflächenbereich, einen Handrückenbereich und mindestens einen Fingerbereich auf. Jeder dieser Bereiche weist zudem eine Innenseite und eine Außenseite auf. Ein erfindungsgemäßer Handschuh kann insbesondere einteilig oder mehrteilig ausgeführt sein, sodass genannte Bereiche des Handschuhs insbesondere entweder als Bereiche desselben Textils oder aber durch separate Textilien gebildet sein können. Insbesondere können auch eine Teilmenge der genannten Bereiche einstückig bzw. einteilig, insbesondere durch ein einzelnes Textil, ausgebildet sein.

Der Handinnenflächenbereich und der Handrückenbereich spannen gemeinsam einen ersten Aufnahmeraum auf. Dieser erste Aufnahmeraum ist eingerichtet zur Aufnahme einer Mittelhand und gegebenenfalls einer Handwurzel sowie insbesondere gegebenenfalls eines Teils eines Unterarms und ist dabei durch die Innenseiten des Handinnenflächenbereichs und des Handrückenbereichs zumindest teilweise begrenzt. Der erste Aufnahmeraum muss dabei insbesondere nicht durch ein umlaufend durchgängiges Textil begrenzt sein, sondern eine teilweise offene Gestaltung, so beispielsweise im Bereich des Handinnenflächenbereichs aber auch des Handrückenflächenbereichs ist denkbar. Insbesondere sind jegliche Gestaltungen von Handinnenflächenbereich und/oder Handrückenflächenbereich denkbar, welche zumindest geeignet sind, die Mittelhand und ggf. die Handwurzel sowie insbesondere gegebenenfalls teilweise den Unterarm eines Trägers derart zu umschließen, dass die Hand des Trägers in dem ersten Aufnahmebereich festgelegt wird bzw. ein Herausführen der Hand aus dem Aufnahmebereich durch den Handinnenflächenbereich und/oder Handrückenflächenbereich gehindert ist. Bevorzugt sind jedoch Ausgestaltungsformen zumindest mit "nicht-offener", insofern geschlossener, Ausgestaltung des Handrückenflächenbereichs, besonders bevorzugt mit ebenfalls nicht-offener", insofern geschlossener, Ausgestaltung des Handinnenflächenbereichs. Insbesondere ist/sind erster Aufnahmeraum und/oder Handinnenflächenbereich und/oder Handrückenflächenbereich derart gestaltet und eingerichtet, dass durch einen Einlass ein Eintritt einer Hand in den ersten Aufnahmeraum ermöglicht ist, insbesondere zunächst deren Fingern und nachfolgend deren Mittelhand und ggf. Handwurzel sowie insbesondere gegebenenfalls teilweise den Unterarms und durch mindestens einen Auslass, insbesondere einen Auslass pro Finger, insofern 5 Auslässen, ein Austritt der Finger aus dem ersten Aufnahmeraum ermöglicht ist, nicht jedoch ein Austritt der Mittelhand und der Handwurzel. Insbesondere erstreckt/erstrecken sich Handinnenflächenbereich und/oder Handrückenflächenbereich ausgehend des Einlasses zum mindestens einen Auslass, spannen insbesondere Einlass und/oder Auslass gemeinsam auf.

Die Innenseiten des mindestens einen Fingerbereich schließen sich in einem Übergangsbereich an die Innenseite des Handinnenflächenbereich und/oder Handrückenbereichs, insbesondere an den mindestens einen Auslass, insbesondere die Auslässe, an. Insbesondere ist pro Auslass ein Fingerbereich vorgesehen bzw. sind vorzugsweise 5 Fingerbereiche vorgesehen. Der Übergangsbereich kann dabei sowohl nahtlos, insbesondere in Ausgestaltungsformen, in welchen der Handinnenflächenbereich, der Handrückenbereich und der mindestens einen Fingerbereich einteilig, insbesondere durch ein Textil, ausgebildet sein als auch durch Verbindungsstellen, insbesondere Verbindungsnähte, zwischen den Bereichen, insbesondere in mehrteiligen Ausgestaltungsformen von Handinnenflächenbereich, Handrückenbereich und mindestens einem Fingerbereich. Insbesondere wenn der mindestens eine Fingerbereich, vorzugsweise alle Fingerbereiche, einteilig mit zumindest dem Handrückenteil, insbesondere durch ein gemeinsames Textil ausgebildet sind, wird der Übergangsbereich durch den mindestens einen Auslass, insbesondere die Auslässe, des ersten Aufnahmebereichs definiert bzw. umspannt und/oder umspannen sie den Auslass zumindest teilweise, vorzugsweise vollständig. Der Übergangsbereich kann in solchen Ausgestaltungsformen insbesondere als der Bereich eines (einteiligen) Textils verstanden werden, in welchem der Handrückenbereich und vorzugsweise auch der Handinnenflächenbereich, insbesondere nahtlos, in den mindestens einen Fingerbereich, insbesondere die Fingerbereiche, insbesondere alle Fingerbereich, übergeht.

Der mindestens eine Fingerbereich spannt ferner mindestens einen zweiten Aufnahmebereich, insbesondere Aufnahmeraum, auf, insbesondere einen zweiten Aufnahmebereiche, insbesondere Aufnahmeraum, je Fingerbereich. Der mindestens eine zweite Aufnahmebereiche, insbesondere Aufnahmeraum ist zumindest teilweise durch die Innenseite des mindestens einen Fingerbereichs begrenzt und eingerichtet zur Aufnahme, insbesondere jeweils, eines Fingers. Zweite Aufnahmebereiche, insbesondere Aufnahmeräume, müssen dabei insbesondere zumindest nicht über deren gesamte Länge vollständig umlaufend begrenzt sein, sondern können auch offen gestaltet sein. Insbesondere kann ein Teil eines in einem zweiten Aufnahmebereich aufgenommenen Fingers freiliegen. Insbesondere wird ein Finger, insbesondere jeder Finger, nach Aufnahme in einen der zweiten Aufnahmebereiche, insbesondere Aufnahmeräume, handrückenseitig zumindest teilweise, vorzugsweise vollständig, von dem mindestens einen Fingerbereich überdeckt und/oder überspannt. Insbesondere kann ein solcher zweiter Aufnahmebereich, derart gestaltet sein, dass der Finger, nach Aufnahme in einen der zweiten Aufnahmebereiche handrückenseitig in einem ersten Unterbereich zumindest teilweise, vorzugsweise vollständig, von dem mindestens einen Fingerbereich überdeckt und/oder überspannt, insbesondere Untertraum, jedoch in einem zweiten Unterbereich, insbesondere Untertraum, umschlossen, insbesondere vollständig umschlossen, ist. Der zweite Unterbereich, insbesondere Unterraum, ist dabei vorteilhafterweise der von dem ersten Aufnahmebereich, insbesondere Unterraum am weitesten entfernte Unterbereich, insbesondere Unterraum, des zweiten Aufnahmebereichs, insbesondere Aufnahmeraums. Insofern sind zweite Aufnahmebereiche, insbesondere Aufnahmeräume, insbesondere endständig, insbesondere vollständig, umlaufend begrenzt.

Erfindungsgemäß ist in dem mindestens einen Fingerbereich eine erste und eine zweite Öffnung angeordnet. Die erste und zweite Öffnung sind beabstandet voneinander entlang einer Längserstreckung des mindestens einen Fingerbereichs angeordnet. Dabei weist die erste Öffnung eine geringe Distanz zum Übergangsbereich auf als die zweite Öffnung. Vorzugsweise sind die erste und zweit Öffnung zueinander fluchtend angeordnet, insbesondere entlang der Längserstreckung. Die Längserstreckung bezeichnet dabei insbesondere jene Erstreckung, welche ausgehend vom Übergangsbereich und/oder des Auslasses des ersten Aufnahmeraums in zum Handrückenbereich und/oder Handinnenflächenbereich und/oder ersten Aufnahmeraum entgegengesetzter Richtung ausgerichtet ist und ist insbesondere die längste Erstreckung des mindestens einen Fingerbereichs insbesondere entsprechend der Längserstreckung eines aufzunehmenden Fingers von der Mittelhand zur Fingerspritze.

Die erste Öffnung ist eingerichtet zum Durchführen einer, insbesondere erfindungsgemäßen, Sensoreinheit und/oder eines Sensors und/oder eines Kabels und/oder eines, insbesondere den Sensor und/oder das Kabel umfassenden, Trägers von der Außenseite zur Innenseite des mindestens einen Fingerbereichs.

Die zweite Öffnung ist eingerichtet zur Aufnahme und insbesondere Fixierung zumindest eines Teils der, insbesondere erfindungsgemäßen, Sensoreinheit und/oder des Senors in der zweiten Öffnung. Durch die Aufnahme, insbesondere Fixierung des Sensors in die zweite Öffnung, insbesondere in der zweiten Öffnung wird eine ortsfeste Positionierung des Sensors, insbesondere in der zweiten Öffnung, ermöglicht. Durch eine solche ortsfeste Positionierung ist es insbesondere möglich, die Bewegung und/oder Position eines Fingers einer in dem Handschuh aufgenommenen Hand mittels des Sensors, respektive der Sensordaten, insbesondere Positions- und/oder Bewegungsdaten, nachzuverfolgen und/oder zu erfassen und/oder nachzubilden.

Insbesondere kann ein Sensor, insbesondere als Teil einer, insbesondere erfindungsgemä-ßen, Sensoreinheit, lösbar in der zweiten Öffnung aufgenommen bzw. festgelegt und bevorzugt insbesondere fixiert werden. Insbesondere kann so, eine Trennbarkeit des Handschuhs als mit der Haut eines Trägers in Kontakt stehenden Textils und den elektrischen Bauteilen, deren Teil der Sensor und/oder die, insbesondere erfindungsgemäße, Sensoreinheit ist/sind, erreicht werden, insbesondere zur Reinigung des Handschuhs. Lösbar bedeutet im Rahmen dieser Anmeldung dabei ein zerstörungsfreies Trennen der entsprechenden Bauteile.

Bevorzugt sind erste und zweite Öffnung jeweils handrückenseitig im dem mindestens eine Fingerbereich angeordnet. Insbesondere ist auf diese Weise eine Beweglichkeit der Finger, zum Beispiel zum Ballen einer Faust, möglichst geringfügig gehindert, insbesondere bei eingesetzter, insbesondere erfindungsgemäßer Sensoreinheit.

Bevorzugt ist die die zweite Öffnung zumindest teilweise, insbesondere umlaufend, von einem verstärkten Rand umgeben ist, wobei der verstärkte Rand insbesondere durch eine Folierung gebildet ist. Durch einen entsprechend ausgebildeten verstärkten Rand kann insbesondere eine Stabilität der zweiten Öffnung verbessert werden und/oder gewährleistet sein, insbesondere die zweite Öffnung, insbesondere dauerhaft, formstabil gehalten werden. Insbesondere kann eine solche Stabilität ein Festlegen und insbesondere Fixieren des Sensors und/oder der, insbesondere erfindungsgemäßen, Sensoreinheit fördern. Eine Folierung kann dabei im Übrigen mit Vorteil einem möglichen Verschleiß des Materials an der zweiten Öffnung entgegenwirken.

Bevorzugt ist/sind die zweite Öffnung und/oder der, bevorzugt verstärkte Rand eingerichtet, zur Fixierung der, insbesondere erfindungsgemäßen Sensoreinheit und/oder des Sensors in einen Rücksprung der, insbesondere erfindungsgemäßen, Sensoreinheit und/oder des Sensors einzugreifen und/oder einen Vorsprung der, insbesondere erfindungsgemäßen, Sensoreinheit und/oder des Sensors zu hintergreifen und/oder von dem Vorsprung der, insbesondere erfindungsgemäßen, Sensoreinheit und/oder des Sensors hintergriffen zu werden. Dabei kann ein Eingriff in einen entsprechenden Rücksprung und/oder das Hintergreifen durch und/oder hinter den Vorsprung, eine Rastfunktion bereitstellen, insbesondere dann, wenn eine Öffnungsweite der zweiten Öffnung geringer ist als eine Weite des Vorsprungs und/oder der Sensor eine größere Weite als die zweite Öffnung auf zwei Seiten des Rücksprungs aufweist und der Rücksprung eine geringere oder zur zweiten Öffnung passende und/oder eine der zweiten Öffnung entsprechende Weite aufweist, Insbesondere weist der Rand zur Durchführung des Sensors und/oder des Vorsprungs eine gewisse Elastizität auf.

In einer bevorzugten Ausgestaltungsform umfasst der mindestens eine zweite Aufnahmebereich, insbesondere Aufnahmeraum, zumindest zwei Teilbereiche, insbesondere Teilräume. Jeder Teilbereich, insbesondere Teilraum, ist zur Überspannung und/oder Aufnahme eines distalen, medialen oder proximalen Fingergliedes eingerichtet. Jeder Teilbereich, insbesondere Teilraum, ist zudem von einer Teilfläche der Innenseite des mindestes eine Fingerbereich zumindest teilweise begrenzt. Entsprechende Teilflächen des mindestens einen Fingerbereichs können dabei insbesondere als proximale, mediale oder distale Teilfläche bezeichnet werden.

Distale Fingerglieder werden dabei insbesondere auch Fingerendglied, mediale Fingerglieder als Fingermittelglied und proximale Fingerglieder als Fingergrundglieder bezeichnet. Insbesondere bezeichnen proximales Fingerglied bzw. Fingergrundglied, das der Mittelhand bzw. den Mittelhandgliedern nächstgelegene Glied der Finger. Insbesondere folgt den proximalen Fingergliedern bzw. Fingergrundglieder, entlang der Längserstreckung des Fingers zunächst die medialen Fingerglieder bzw. Fingermittelglieder und diesen nachfolgend die distalen Fingerglieder bzw. Fingerendglieder. Insbesondere gilt Vorstehendes für Daumen als besondere Finger nur dahingehend, dass Daumen über keine medialen Fingerglieder bzw. Fingermittelglieder verfügen, sich insofern für Daumen die distalen Fingerglieder bzw. Fingerendglieder direkt an die proximalen Fingerglieder bzw. Fingergrundglieder anschließen.

In einer besonders bevorzugten Ausgestaltungsform des erfindungsgemäßen Handschuhs kann dabei die erste Öffnung in der Teilfläche des mindestens einen Fingerbereichs angeordnet ist, welcher den zur Überspannung und/oder Aufnahme des proximalen Fingergliedes eingerichteten Teilbereich, insbesondere Teilraum, zumindest teilweise begrenzt, bzw. ist vorzugsweise angeordnet in der proximalen Teilfläche des mindestens einen Fingerbereichs. Eine solche Anordnung der ersten Öffnung kann dabei insbesondere eine besonders vorteilhafte Führung eines Kabels der, insbesondere erfindungsgemäßen, Sensoreinheit sicherstellen.

Bevorzugt ist ferner, dass die zweite Öffnung in der Teilfläche des mindestens einen Fingerbereichs angeordnet ist, welcher den zur Überspannung und/oder Aufnahme des zum distalen Fingerglied bzw. Fingerendglied nächstliegenden Fingerglieds, insbesondere des medialen Fingergliedes, eingerichteten Teilbereich, insbesondere Teilraum, zumindest teilweise begrenzt bzw. ist im medialen Teilbereich angeordnet. Insbesondre ermöglicht eine solche Anordnung der zweiten Öffnung(en) eine besonders vorteilhafte Anordnung des Sensors oder der Sensoren, insbesondere zur Erfassung besonders zur Abbildung und/oder Widergabe einer Bewegung und/oder Position geeigneter Sensordaten. Dadurch ist insbesondere sichergestellt, dass eine auf ein Greifen beispielsweise eines Gegenstandes ausgerichtete Bewegung eines Fingers gesichert erfasst werden kann, da in einer solchen Bewegung insbesondere zumindest Kontakt mit diesen Fingergliedern besteht, bzw. zumindest diese Fingerglieder bewegt werden, insbesondere ein Kontakt mit einem proximalen Fingerglied bzw. Fingergrundgliedern regelmäßig aber für eine solche Bewegung nicht zwingend notwendig ist. Eine entsprechende Bewegung kann also mit Sensoren angeordnet an den proximalen Fingergliedern bzw. Fingergrundgliedern nicht gesichert erfasst bzw. adäquat abgebildet werden. Ein Vorsehen der zweiten Öffnungen an den distalen Fingergliedern bzw. Fingerendgliedern hingegen ist vor allem dahingehend nicht bevorzugt, da bei einer Anordnung an den distalen Fingergliedern bzw. Fingerendgliedern entsprechend angeordnete Sensoren bzw. Sensoreinheiten durch den Verwender bzw. Träger des Handschuhs häufig als störend empfunden werden kann, insbesondere im Falle von Greifbewegungen, und ferner insbesondere auch eine genau Positionierung des/der Sensors/-en bzw. Sensoreinheit(en) erschwert wird, insbesondere im Hinblick auf die Varianz der unterschiedlichen Fingerlängen unterschiedlicher Verwender bzw. Träger des Handschuhs.

Vorstehende Ausführungen hinsichtlich einer bevorzugten Anordnung der ersten und zweiten Öffnung(en) haben dabei für Daumen nur bedingt Gültigkeit, da Daumen ein mediales Fingerglied gerade nicht aufweisen. Für Daumen kann es daher besondere vorteilhaft sein, sowohl die erste als auch die zweite Öffnung in der Teilfläche des mindestens einen Fingerbereichs anzuordnen, welcher den zur Überspannung und/oder Aufnahme des proximalen Fingergliedes eingerichteten Teilbereich, insbesondere Teilraum, zumindest teilweise begrenzt, bzw. sind vorzugsweise angeordnet in der proximalen Teilfläche des mindestens einen Fingerbereichs. Insbesondre ermöglicht eine solche Anordnung der zweiten Öffnung(en) für Daumen eine besonders vorteilhafte Anordnung des (Daumen-)Sensors, insbesondere zur Erfassung besonders zur Abbildung und/oder Widergabe einer Bewegung und/oder Position des Daumens geeigneter Sensordaten. Alternativ kann die erste Öffnung vorteilhafterweise auch im Übergangsbereich zwischen dem Fingerbereich und der Handrückenteil angeordnet sein. Eine solche Anordnung der ersten Öffnung für einen Daumen kann dabei insbesondere eine besonders vorteilhafte Führung eines Kabels der, insbesondere erfindungsgemäßen, Sensoreinheit sicherstellen.

Mit Vorteil kann der erfindungsgemäße Handschuh als fingerloser Handschuh ausgeführt sein und/oder kann der mindestens eine Fingerbereich kein Teilraum eingerichtet zur Aufnahme eines distalen Fingergliedes aufweisen und/oder kann eine dritte Öffnung zum Austritt eines Fingers aus dem Handschuh und/oder dem mindestens einen Fingerbereich aufweisen.

Ferner wird die Aufgabe gelöst durch eine erfindungsgemäße Sensoreinheit zur Einbringung in eine Öffnung eines Handschuhs, insbesondere in eine zweite Öffnung eines erfindungsgemäßen Handschuhs, nach Anspruch 6. Die Ansprüche 7 und 8 sowie 11 beschreiben ferner vorteilhafte Weiterbildungen der erfindungsgemäßen Sensoreinheit.

Die erfindungsgemäße Sensoreinheit weist dabei mindestens einen Sensor, einen Träger und mindestens ein Kabel eingerichtet zur Verbindung des Sensors mit einer Datenverarbeitungseinrichtung, insbesondere zur Übertragung von vom Sensor erfassten Sensordaten, insbesondere Positions- und/oder Bewegungsdaten, auf.

Der mindestens eine Sensor ist in und/oder an dem Träger festgelegt. Bei dem mindestens einen Sensor kann es sich insbesondere um einen IMU-Sensor (Inertial Measurement Unit) handeln, welcher vorzugsweise einen Beschleunigungssensor und/oder ein Gyroskop und/oder ein Magnetometer aufweist, so dass eine Bewegung und/oder eine Winkelgeschwindigkeit und/oder eine Ausrichtung eines Objekts, insbesondere Finger und/oder Hand, erfassbar ist/sind. Ein solcher Beschleunigungssensor kann insbesondere eine lineare Beschleunigung entlang von drei Raumachsen erfassen, während ein solches Gyroskop insbesondere zum Erfassen einer Winkelgeschwindigkeit um die Raumachsen geeignet sein kann sowie ein solches Magnetometer eingerichtet sein kann zur Erfassung von Stärke und Richtung eines zur Orientierung nutzbaren Magnetfeldes. IMU-Sensoren sind dabei in der Regel insbesondere kompakt bzw. können kompakt ausgebildet sein, weisen in der Regel ein nur geringes Gewicht auf und sind zumeist zudem robust gegenüber etwaigen Umwelteinflüssen wie Staub, Öl, Feuchtigkeit, Schmutz oder dergleichen ausgebildet und sind insbesondere geeignet Positions- und/oder Bewegungsdaten zu erfassen.

Ferner ist auch zumindest ein Teil des mindestens einen Kabels an und/oder in dem Träger festgelegt. Insbesondere können besonders sensible Abschnitte des mindestens einen Kabels durch Festlegung an und/oder in dem Träger gegen beispielsweise ungewollte Biegung und/oder Kabelbruch geschützt werden.

Erfindungsgemäß weist der Täger an seiner Oberfläche eine Auswölbung auf. An einer Kontaktfläche zwischen Auswölbung und Träger hat die Auswölbung eine erste flächige Ausdehnung. Die Oberfläche des Trägers weist zudem eine zweite flächige Ausdehnung, insbesondere beinhaltende die Kontaktfläche, auf. Erfindungsgemäß ist die zweite flächige Ausdehnung an zumindest zwei einander gegenüberliegenden Seiten der Auswölbung, vorzugsweise, insbesondere vollständig, umlaufend um die Auswölbung, breiter ist als die erste flächige Ausdehnung. Insbesondere kann die Auswölbung, insbesondere einteilig, an den Träger angeformt sein und/oder ist bevorzugt integraler Bestandteil des Trägers. Insbesondere kann die Kontaktfläche dabei eine virtuelle Fläche sein und beschreibt insbesondere jene Fläche an welcher die Auswölbung aus dem Träger hinaus und/oder von diesem hervortritt.

Erfindungsgemäß ist der Sensor im Bereich der Auswölbung angeordnet und/oder die Auswölbung umfasst den Sensor und/oder umgibt den Sensor an zumindest vier, vorzugsweise sechs, Seiten und/oder vollständig in alle Raumrichtungen und/oder ist durch den Sensor ausgebildet. Insbesondere liegt der Sensor zumindest teilweise in der ersten flächigen Ausdehnung und/oder bestimmt diese. Insbesondere ist die Auswölbung eingerichtet in der Öffnung, insbesondere zweiten Öffnung des erfindungsgemäßen Handschuhs angeordnet und/oder festgelegt, insbesondere fixiert zu werden.

Vorteilhafterweise kann die Auswölbung eine, insbesondere umlaufende, Wand aufweisen. Die, insbesondere umlaufende, Wand und/oder Auswölbung ist dabei vorzugsweise so gestaltet, dass diese derart in die Öffnung, insbesondere zweiten Öffnung, des, insbesondere erfindungsgemäßen, Handschuhs eingebracht und/oder in dieser angeordnet werden kann, dass die Wand der Auswölbung zumindest teilweise, insbesondere vollständig, an einem Rand, insbesondere verstärkten Rand, der Öffnung, insbesondere zweite Öffnung, anliegt, insbesondere formschlüssig anliegt. Insbesondere kann ein solches Anliegen der Wand an dem, insbesondere verstärkten, Rand der Öffnung, insbesondere zweiten Öffnung, des, insbesondere erfindungsgemäßen, Handschuhs eine Beweglichkeit des Sensors und/oder der Sensoreinheit innerhalb dieser beschränken, vorzugsweise unterbinden, kann insbesondere insofern zur Fixierung des Sensors und/oder der Sensoreinheit beitragen, insbesondere zumindest entlang der ersten und/oder zweiten flächigen Ausdehnung.

In einer bevorzugten Ausgestaltungsform ist der Träger eingerichtet, zumindest teilweise an einer Innenseite eines Fingerbereichs des, insbesondere erfindungsgemäßen, Handschuhs, insbesondere zur Fixierung des Trägers an der Innenseite und/oder zur Fixierung der Auswölbung und/oder des mindestens einen Sensors in der Öffnung, insbesondere zweiten Öffnung, anzuliegen, insbesondere in einem Teilbereich, insbesondere Teilraum, des Fingerbereichs eingerichtet zur Aufnahme eines medialen Fingerglieds bzw. im Falle eines Daumens eingerichtet zur Aufnahme eines proximalen Fingerglieds. Insbesondere kann so, sofern im entsprechenden Fingerbereich ein Finger eingebracht bzw. im entsprechenden Teilbereich, insbesondere Teilraum ein entsprechendes Fingerglied aufgenommen ist, eine weitere Art der Festlegung, insbesondere Fixierung, des Sensors und/oder der Sensoreinheit erreicht werden, insbesondere in eine zumindest teilweise vertikal zur ersten und/oder zweiten flächigen Ausdehnung verlaufende Richtung. Insbesondere kann dann die Sensoreinheit und/oder der Sensor gegenüber dem Finger bzw. Fingerglied orts- bzw. positionsfest fixiert sein, insbesondere aufgrund der dauerhaften orts- bzw. positionsfesten Positionierung des Sensors in und/oder an dem Träger und der Fixierung des Trägers.

In einer besonders bevorzugten Ausführungsform einer erfindungsgemäßen Sensoreinheit ist zusätzlich oder alternativ, vorzugsweise zusätzlich, an der Auswölbung und/oder dem Sensor ein, vorzugsweise umlaufender, Vorsprung angeordnet und/oder die Auswölbung und/oder der Sensor weisen einen Rücksprung auf. Insbesondere ist/sind ein entsprechender Vorsprung und/oder Rücksprung an der Wand der Auswölbung und/oder des Sensors angeordnet und/oder in der Wand ausgebildet und/oder Teil der Wand.

Ein solcher Vorsprung ist eingerichtet, den Rand, insbesondere verstärkten Rand, der Öffnung, insbesondere zweiten Öffnung, zu hintergreifen, insbesondere auf der Außenseite des Fingerbereichs, und/oder von dem Rand, insbesondere verstärkten Rand, der Öffnung, insbesondere zweiten Öffnung, hintergriffen zu werden. Bevorzugt liegen dann Vorsprung und zumindest ein Teil des Trägers auf unterschiedlichen Seiten der Öffnung, insbesondere zweiten Öffnung, sodass die Öffnung, insbesondere zweite Öffnung dann insbesondere von dem Träger und dem Vorsprung umschlossen wird.

Ein entsprechender Rücksprung ist eingerichtet, zur Aufnahme und/oder Eingriff des Rands, insbesondere verstärkten Rands, der Öffnung, insbesondere zweiten Öffnung, in den Rücksprung. Insbesondere kann der Rücksprung vorzugsweise in der Wand der Auswölbung und/oder des Sensors ausgebildet sein.

Sowohl das Hintergreifen des Vorsprungs und/oder Hintergreifen durch den Vorsprung als auch die Aufnahme und/oder der Eingriff des Rands, insbesondere verstärkten, Rands in den Rücksprung können vorzugweise der Fixierung der Auswölbung und/oder des mindestens einen Sensors in der Öffnung, insbesondere zweiten Öffnung dienen, insbesondere gemeinsam mit den vorherig beschrieben Konzepten zur Festlegung bzw. Fixierung der Sensoreinheit und/oder des mindestens einen Sensors und/oder der Auswölbung. Bevorzugt wirken diese Konzepte zusammen.

Mit Vorteil kann der Träger und/oder die Auswölbung und/oder der Vorsprung aus einem flexiblen und/oder isolierendem Material, bevorzugt einem Silikon, gefertigt sein, welches jedoch insbesondere, sofern das Material nicht aktiv gebogen oder dergleichen wird, ansonsten formstabil ist. Insbesondere kann ein solches Material durch eine Fingerbewegung elastisch und/oder temporär verformt werden, ohne dass dies von einem Verwender der Sensoreinheit als störend empfunden wird.

Mit Vorteil kann der mindestens eine Sensor in dem Träger und/oder in der Auswölbung eingelassen, insbesondere eingegossen, sein und/oder kann zumindest ein Teil des mindestens einen Kabels in dem Träger eingelassen, insbesondere eingegossen, sein. Insbesondere kann der mindestens eine Sensor auf diese Art weitestgehend vor Umwelteinflüssen geschützt werden bzw. kann ein teilweises Einlassen, insbesondere Eingießen, des mindestens einen Kabels insbesondere Halt gegen ein Loslösen vom Sensor oder dergleichen geben.

Insbesondere kann der Träger als Form- und/oder Spritzguss hergestellt sein, sodass dieser auf einfache Weise hergestellt werden kann. Insbesondere kann auch das bevorzugte, flexible und isolierende Material Silikon in Form- und/oder Spritzgussverfahren verwendet werden.

Bevorzugt kann der Träger eine zum Anlegen an einen Finger geeignete Form aufweisen. Insbesondere kann der Träger hierzu eine flach, bevorzugt eben, ausgebildete, flexible Unterseite aufweisen, insbesondre auf der zur Auswölbung abgewandten Seite des Trägers. Insbesondere kann der Träger bevorzugt eine Breite von 5 mm bis 20 mm, Länge von 10 mm bis 60 mm und eine Höhe von 1 mm bis 15 mm aufweisen, wobei hierbei die Auswölbung insbesondere hinsichtlich der Höhe des Trägers nicht beachtet ist. Ein Träger mit derartigen Dimensionen kann dabei besonders gut zur Anlage an einen Finger geeignet sein. Insbesondere können sich die Dimensionen unterschiedlicher, zur Anlage an unterschiedliche Finger ausgelegter Träger, unterscheiden bzw. sind an die entsprechenden Finger angepasst.

Gelöst wird die Aufgabe zudem durch einen erfindungsgemäßen Überwurf, insbesondre nach Anspruch 9 bzw. dessen vorteilhaften Ausgestaltungsformen wie insbesondere beschrieben in den Ansprüche 10 und 11. Ein erfindungsgemäßer Überwurf verfügt über mindestens eine, insbesondere erfindungsgemäße Sensoreinheit, insbesondere mehrere, insbesondere erfindungsgemäße Sensoreinheiten, insbesondere 3 oder mehr Sensoreinheiten, vorzugsweise 5 Sensoreinheiten. Dabei reichen in der Regel 3 Sensoren aus, diese vorzugsweise angeordnet zur Widergabe einer Bewegung und/oder Position eines Daumens sowie zweier weiterer Finger, vorzugsweise Zeigefinger (*Index*) und Mittelfinger (*Digitus medius*), um insbesondere eine Greifbewegung der Finger abbilden zu können. Bevorzugt ist jedoch eine Ausgestaltung mit je einer, insbesondere erfindungsgemäßen, Sensoreinheit je Finger, insofern fünf Sensoreinheiten zur vorzugsweisen vollständigen Abbildung der Positionen und/oder Bewegungen aller Finger einer Hand.

Der Überwurf ist vorzugsweise dahingehend ausgebildet, das mindestens eine Kabel der mindestens einen Sensoreinheit zu führen und/oder gegenüber äußeren Einflüssen zu schützen. Gleichzeitig ist der Überwurf eingerichtet, den, insbesondere erfindungsgemäßen, Handschuh zumindest teilweise zu überdecken, vorzugsweise einen, insbesondere den, Handrückenbereich des, insbesondere erfindungsgemäßen, Handschuhs zumindest teilweise zu überdecken. Besonders bevorzugt ist es, wenn der Überwurf insbesondere den Handschuh, insbesondere Handrückenbereich des, insbesondere erfindungsgemäßen, Handschuhs, nicht vollständig überdeckt, insbesondere um eine Luftzirkulation zum Handschuh, insbesondere Handrückenbereich des, insbesondere erfindungsgemäßen, Handschuhs bestmöglich zu gewährleisten.

Insbesondere ist der Überwurf vorzugsweise lösbar mit dem Handschuh verbindbar und/oder kann an diesem angeordnet und/oder festgelegt, insbesondere fixiert, werden. Insbesondere kann der Überwurf mit Vorteil eine Befestigungsmanschette aufweisen, welche insbesondere eingerichtet ist, ein Handgelenk und/oder Unterarm umschließen zu können. Eine solche Manschette ist dabei mit Vorteil so ausgebildet, dass ein Öffnen und Schließen der Manschette möglich ist, kann dabei mit Vorteil insbesondere eine haltgebende Struktur, beispielweise einen Klettverschluss oder einen Verschluss mit Knöpfen oder dergleichen aufweisen.

Erfindungsgemäß ist das mindestens eine Kabel der mindestens einen, insbesondere erfindungsgemäßen, Sensoreinheit zumindest teilweise an und/oder in dem Überwurf festgelegt, insbesondere zum Schutz und/oder Führen des mindestens einen Kabels.

Insbesondere weist der Überwurf mit Vorteil zum Festlegen, insbesondere zur Aufnahme, des mindestens einen Kabels der mindestens einen Sensoreinheit zwei Textillagen auf und ist das mindestens eine Kabel zumindest teilweise in einem Zwischenraum zwischen den zwei Textillagen angeordnet und/oder festgelegt. Insbesondere kann das mindestens eine Kabel so zumindest teilweise geführt werden, wird insbesondere geschützt gegen beispielweise ein ungewolltes Ziehen an dem mindestens einen Kabel und/oder gegenüber äußeren Einflüssen, insbesondere Beschädigungen des mindestens einen Kabels durch solche.

Ein wie vorstehend beschriebener Überwurf, insbesondere ausgebildet als gemeinsamen Überwurf mit mehreren erfindungsgemäßen Sensoreinheiten, stellt dabei ferner auch eine eigenständige Lösung der der Erfindung zu Grunde liegenden Aufgabe dar, kann dabei insbesondere mit Vorteil die Vorteile und vorteilhaften Weiterbildungen einer erfindungsgemä-ßen Sensoreinheit aufweisen.

Mit Vorteil kann der Träger einer erfindungsgemäßen Sensoreinheit derart angeordnet sein, dass sich ein Ende des Trägers, an den Überwurf, insbesondere unmittelbar, anschließt und/oder ist der Träger, insbesondere an dem Ende, mit dem Überwurf verbunden und/oder an dem Überwurf festgelegt, vorzugsweise vernäht, und/oder ist der Träger zumindest teilweise, insbesondere das Ende des Trägers, zwischen den zwei Textillagen des Überwurfs angeordnet und/oder festgelegt, bevorzugt vernäht. Insbesondere kann so das mindestens eine Kabel der mindestens einen Sensoreinheit bestmöglich geschützt und/oder geführt sein.

In einer weiteren denkbaren Ausgestaltungsform bilden der Träger der mindestens einen Sensoreinheit und der Überwurf eine integrale Einheit. Vorzugsweise sind Träger und Überwurf insbesondere einstückig ausgebildet, insbesondere aus gleichem Material gefertigt, beispielsweise aus Silikon, insbesondere hergestellt durch ein Form- und/oder Spritzgussverfahren. In einer derartigen Ausführungsform wird das mindestens eine Kabel der mindestens einen Sensoreinheit insbesondere vollständig durch Träger und/oder Überwurf umschlossen, ist bevorzugt vollständig in Silikon, oder einem ähnlichen Material, eingebettet.

Mit Vorteil kann die erfindungsgemäße Sensoreinheit und/oder der erfindungsgemäße Überwurf zusätzlich eine Datenverarbeitungseinrichtung zur Verarbeitung der vom Sensor erfassten Sensordaten, insbesondere Positions- und/oder Bewegungsdaten, aufweisen. Die Datenverarbeitungseinrichtung ist dabei über das mindestens eine Kabel mit dem mindestens einen Sensor, insbesondere lösbar, verbunden und/oder verbindbar. Ferner kann die Datenverarbeitungseinrichtung mit Vorteil lösbar am Überwurf und/oder dem Handschuh festgelegt sein, ist dabei vorzugsweise an und/oder mit dem Überwurf und/oder Handschuh, insbesondere lösbar, verschraubt.

Die Datenverarbeitungseinrichtung kann dabei vorzugsweise ein Gehäuse umfassen, in welchem neben einer, zur Datenverarbeitung der Sensordaten eingerichtete Hauptplatine auch optional eine Quelle zur Versorgung der Datenverarbeitungseinrichtung sowie des mindestens einen Sensors mit Storm angeordnet sein kann, insbesondere in Form einer Batterie und/oder eines wiederaufladbaren Akkus. Mit Vorteil kann das Gehäuse mehrteilig, insofern aufweisend mehrere Gehäuseteile ausgebildet sein, wobei die Gehäuseteile jeweils miteinander und/oder mit dem Überwurf und/oder Handschuh verschraubt werden können.

Insbesondere ermöglichen das lösbare Verschrauben und/oder der mehrteilige Aufbau des Gehäuses der Datenverarbeitungseinrichtung, dass im Falle von beispielsweise notwendigen Reparaturen, beispielsweise die Hauptplatine auf einfache Weise zugänglich sein kann.

Besonders bevorzugt ist dabei eine Ausgestaltungsform, in welcher das Gehäuse lösbar mit dem Überwurf verbindbar ausgestaltet und/oder verbunden ist. Insbesondere ist ein solches Gehäuse vorzugsweise dreiteilig ausgebildet und ist insbesondere ein mittleres der Gehäuseteile fest mit dem Überwurf verbunden und/oder in den Überwurf eingearbeitet, vorzugsweise mit dem Überwurf vernäht, und können die anderen Gehäuseteile mit dem mittleren Gehäuseteil verschraubt werden. Mit Vorteil ist das mittlere Gehäuseteil eingerichtet, die Hauptplatine sowie insbesondere die Quelle zur Versorgung der Datenverarbeitungseinrichtung sowie des mindestens einen Sensors mit Storm insbesondere in Form einer Batterie und/oder eines wiederaufladbaren Akkus, aufzunehmen und/oder die Hauptplatine mit dem mindestens einen Kabel zu kontaktieren.

Insbesondere ist die Datenverarbeitungseinrichtung eingerichtet, vom mindestens einen Sensor erfasste Daten, insbesondere Bewegungs- und/oder Positionsdaten, zu verarbeiten und/oder zu vorverarbeiten.

Insbesondere ist die Datenverarbeitungseinrichtung eingerichtet eine Verarbeitung und/oder Vorverarbeitung der Sensordaten durchzuführen, wie in EP 4 312 001 A1 beschrieben. Insbesondere ist der mindestens eine Sensor ein Senor, welcher geeignet ist, für eine entsprechende Verarbeitung und/oder Vorverarbeitung geeignete Sensordaten, insbesondere Positions- und/oder Bewegungsdaten, bereitzustellen, ist insbesondere vorteilhafterweise ein kombinierter IMU (*Inertial Measurement Unit*) MARG (*Magnetic, Angular Rate, and Gravity*) Sensor.

Mit Vorteil verfügt die Datenverarbeitungseinrichtung über Mittel zur Übertragung und/oder Weiterleitung verarbeiteter und/oder vorverarbeiteter Sensordaten, insbesondere mittels Drahtloskommunikation, insbesondere zur Kommunikation mit einem Funknetzwerk und/oder einen Akkumulator und/oder eine Batterie zur Stromversorgung.

Gelöst wird die Aufgabe zudem durch ein Handschuhsystem nach Anspruch 12 aufweisend einen erfindungsgemäßen Handschuh und mindestens eine erfindungsgemäße Sensoreinheit, sowie den in den Ansprüche 13 und 14 beschriebenen vorteilhaften Weiterbildungen des erfindungsgemäßen Handschuhsystems.

In einem erfindungsgemäßen Handschuhsystem ist der mindestens eine Sensor und/oder die Auswölbung der Sensoreinheit in der zweiten Öffnung des mindestens einen Fingerbereichs angeordnet, insbesondere fixiert, und/oder dafür geeignet, vorteilhafterweise durch Eingriff des Rands, insbesondere verstärkten Rands, in den Rücksprung und/oder durch Hintergreifen des Rands, insbesondere verstärkten Rands, mittels des Vorsprungs. Insbesondere ist die Anordnung dabei lösbar ausgebildet, sodass die mindestens einen Sensoreinheit und des Handschuhs voneinander gelöst werden können. Im Gegensatz zu herkömmlichen Befestigungsstrukturen ist diese Art der Anordnung, insbesondere Fixierung, kompakt und nahezu nicht auftragend, bei gleichbleibend hoher Bewegungsfreiheit der in dem Handschuhsystem befindlichen Finger eines Nutzers des Handschuhsystems.

Der Träger der mindestens einen Sensoreinheit liegt zumindest teilweise an der Innenseite des mindestens einen Fingerbereichs, insbesondere formschlüssig, an, vorzugweise im zur Aufnahme des medialen Fingergliedes eingerichteten Teilbereichs, insbesondere Teilraums, wobei der Träger eines für einen Daumen ausgelegten Sensoreinrichtung mangels medialen Fingerglieds für Daumen vorzugsweise im zur Aufnahme des proximalen Fingergliedes eingerichteten Teilbereichs, insbesondere Teilraums, anliegt. Insbesondere weist der Träger eine hierzu passende Form, insbesondere entsprechend einer erfindungsgemäßen Ausgestaltungsform einer erfindungsgemäßen Sensoreinheit auf.

Erfindungsgemäß ist in einem erfindungsgemäßen Handschuhsystem das mindestens eines Kabel der mindestens einen Sensoreinheit durch die erste Öffnung des mindestens einen Fingerbereichs geführt, dabei vorzugsweise derart, dass das mindestens eine Kabel von einer Außenseite des mindestens eine Fingerbereichs durch die erste Öffnung auf eine Innenseite des mindestens einen Fingerbereichs geführt ist, vorzugsweise ferner derart, dass ein Abschnitt des Kabels gelegen zwischen erster und zweiter Öffnung des mindestens einen Fingerbereichs im mindestens einen zweiten Aufnahmebereich, insbesondere Aufnahmeraum, angeordnet ist und/oder an der Innenseite des mindestens einen Fingerbereichs zwischen erster und zweiter Öffnung verläuft. Insbesondere verläuft das mindestens eine Kabel nach Eintritt durch die erste Öffnung auf die Innenseite des mindestens einen Fingerbereichs ohne Austritt auf die Außenseite des mindestens einen Fingerbereichs zum Sensor. Insbesondere kann der Träger der mindestens einen Sensoreinheit derart ausgestaltet und/oder angeordnet sein, dass ein Abschnitt des Trägers, in welchem insbesondere das mindestens eine Kabel umschlossen wird, derart in der ersten Öffnung angeordnet ist, dass der Träger von der Außenseite des mindestens einen Fingerbereichs durch die erste Öffnung auf die Innenseite des mindestens einen Fingerbereichs geführt ist. Insofern kann ein Teil des Trägers auch bei Anordnung des Trägers in der ersten Öffnung bzw. Sensors und/oder Auswölbung in der zweiten Öffnung, auf der Außenseite des mindestens einen Fingerbereichs liegen, insbesondere in zur zweiten Öffnung abgewandten Richtung ausgehend der ersten Öffnung.

Durch vorbeschriebene Anordnung des Sensors, insbesondere als Teil des Trägers, innerhalb der zweiten Öffnung trägt dieser nicht auf dem Handschuh auf, wird von einem Nutzer des Handschuhsystems insbesondere nicht als sperrig oder störend empfunden. Insbesondere wird eine Beweglichkeit einer in dem Handschuhsystem befindlichen Hand möglichst wenig eingeschränkt.

Mit besonderem Vorteil ist ein, insbesondere erfindungsgemäßer, Überwurf vorgesehen. Dieser Überwurf ist, insbesondere lösbar, verbunden und/oder verbindbar mit dem Handschuh und überdeckt den Handschuh, insbesondere das Handrückenteil, in einem Überdeckungsbereich zumindest teilweise.

Insbesondere kann das mindestens eine Kabel zumindest teilweise zwischen Handrückenteil und Überwurf angeordnet und/oder festgelegt sein. Bevorzugt ist das mindestens eine Kabel zumindest teilweise an und/oder in dem Überwurf festgelegt und/oder wird durch den Überwurf, insbesondere unmittelbar, geführt und/oder liegt unmittelbar, insbesondere fest verbunden, an dem Überwurf an. Besonders bevorzugt ist das mindestens eine Kabel zumindest teilweise zwischen den, insbesondere zwei, Textillagen des Überwurfs festgelegt und/oder angeordnet. Insbesondere kann das mindestens eine Kabel nach Austritt aus dem Überwurf, insbesondere aus den zwei Textillagen des Überwurfs, und/oder nach Verlassen des Überdeckungsbereichs zwischen Überwurf und Handrückenbereich freiliegend angeordnet sein. Bevorzugt verläuft jedoch das mindestens eine Kabel nach Austritt aus dem Überwurf, insbesondere aus den zwei Textillagen des Überwurfs, und/oder nach Verlassen des Überdeckungsbereichs zwischen Überwurf und Handrückenbereich innerhalb des Trägers, dabei insbesondere bevorzugt ausgehend des Überwurfs von der Außenseite des Handrückenbereichs und/oder mindestens einen Fingerbereichs durch die erste Öffnung auf die Innenseite des mindestens einen Fingerbereichs. Insbesondere kann das mindestens eine Kabel mit Vorteil derart verlaufen, dass ein Abschnitt des mindestens einen Kabels gelegen zwischen erster und zweiter Öffnung im mindestens einen zweiten Aufnahmebereich, insbesondere Aufnahmeraum, angeordnet ist und/oder an der Innenseite des mindestens einen Fingerbereichs zwischen erster und zweiter Öffnung verläuft.

In einer besonders bevorzugten Ausgestaltungsform sind von der Auswölbung abgewandte Enden des Trägers mit dem Überwurf verbunden und/oder grenzen die Enden direkt an den Überwurf. Mit Vorteil kann so das mindestens eine Kabel gegenüber äußeren Einflüssen abgeschirmt werden.

Insbesondere entspricht der Überwurf des Handschuhsystems einem erfindungsgemäßen Überwurf aufweisend mindestens eine erfindungsgemäße Sensoreinheit.

In einer weiteren vorteilhaften Ausgestaltungsform eines erfindungsgemäßen Handschuhsystems ist eine Datenverarbeitungseinrichtung zur Verarbeitung der vom Sensor erfassten Sensordaten, insbesondere Positions- und/oder Bewegungsdaten, vorgesehen. Die Datenverarbeitungseinrichtung ist dabei über das mindestens eine Kabel mit dem mindestens einen Senor, insbesondere lösbar, verbunden und/oder verbindbar und kann vorzugsweise am Überwurf, insbesondere lösbar festgelegt sein. Insbesondere kann die Datenverarbeitungseinrichtung des Handschuhsystems der Datenverarbeitungseinrichtung der mindestens einen erfindungsgemäßen Sensoreinheit entsprechen.

In einer weiteren vorteilhaften Ausgestaltungsform weist das Handschuhsystem einen Handrückensensor auf. Dieser ist vorzugsweise als Teil des Überwurfs ausgebildet und oberhalb des Handrückenbereichs des Handschuhs angeordnet. Alternativ kann der Handrückensensor aber auch, insbesondere lösbar, am Handrückenbereich angebracht sein. Zu diesem Zweck kann, insbesondere analog zu den Fingerbereichen im Handdrückenteil eine erste und zweite Öffnung vorgesehen sein. Bevorzugt ist jedoch eine Ausgestaltung mit Handrückensensor als Teil des Überwurfs oder festgelegt an dem Überwurf.

Gelöst wird die Aufgabe zudem durch ein Verfahren zur Bildung eines, insbesondere erfindungsgemäßen, Handschuhsystems nach Anspruch 15.

Dabei umfasst ein erfindungsgemäßes Verfahren die nachfolgenden Schritte:
a) Bereitstellen eines, insbesondere erfindungsgemäßen, Handschuhs und mindestens einer, insbesondere erfindungsgemäßen Sensoreinheit;
b) Zumindest teilweises Durchführen des Trägers der mindestens einen Sensoreinheit und Durchführung zumindest eines Teils des mindestens einen Kabels durch die erste Öffnung des mindestens einen Fingerteils des Handschuhs;
c) Anordnung des mindestens einen Sensors und/oder Auswölbung der mindestens einen Sensoreinheit in der zweiten Öffnung des Handschuhs und insbesondere Fixieren des mindestens einen Sensors und/oder Auswölbung der mindestens einen Sensoreinheit in der zweiten Öffnung, insbesondere durch Eingriff des Rands, insbesondere verstärkten Rands, in den Rücksprung und/oder durch Hintergreifen des Rands, insbesondere verstärkten Rands, hinter den Vorsprung und/oder durch Hintergreifen des Vorsprungs hinter den Rand, insbesondere verstärkten Rand und/oder durch Anlegen des Trägers an der Innenseite des mindestens einen Fingerteils, insbesondere im zur Aufnahme eines distalen und/oder medialen Fingerglieds eingerichteten Teilraum des mindestens einen Fingerteils.

Optional, jedoch besonders bevorzugt erfolgt mit Schritt d) auch ein Festlegen und/oder Fixieren eines, insbesondere erfindungsgemäßen, Überwurfs an dem Handschuh, vorzugsweise nach Schritt c).

Insbesondere kann mit dem erfindungsgemäßen Verfahren ausgehend eines erfindungsgemäßen Handschuhs und mindestens einer erfindungsgemäßen Sensoreinheit ein erfindungsgemäßes Handschuhsystem ausgebildet werden.

Auch kann das Verfahren in umgekehrter Reihenfolge durchgeführt werden zum Zerlegen des erfindungsgemäßen Handschuhsystems in Einzelteile, insbesondere Handschuh und Sensoreinheit(en). Insbesondere kann so der Handschuh als mit der Haut eines Trägers in Kontakt stehendes Textil von den elektronischen Bauteilen getrennt werden. Dies ermöglicht insbesondere eine einfache Reinigung des Handschuhs.

Vorstehend beschriebene Vorteile und vorteilhafte Ausgestaltungsformen des erfindungsgemäßen Handschuhs, der erfindungsgemäßen Sensoreinheit, des erfindungsgemäßen Handschuhsystems und des erfindungsgemäßen Verfahrens lassen sich dabei untereinander kombinieren, sind insbesondere aufeinander anwendbar, haben insofern Gültigkeit für alle vorgenannten Teile der Erfindung.

Mit besonderem Vorteil hat ein erfindungsgemäßer Handschuh und/oder ein erfindungsgemäßes Handschuhsystem fünf Fingerbereiche, wobei davon vier Fingerbereiche zur Aufnahme der Finger Zeigefinger (*Index*), Mittelfinger (*Digitus medius*), Ringfinger (*Digitus anularis*) und kleiner Finger (*Digitus minimus*) eingerichtet sind, vorzugsweise entsprechend analog zu einander ausgebildet sind und ein weiterer Fingerbereich zur Aufnahme des Daumens (*Pollex*) eingerichtet ist, welcher insbesondere im Hinblick den restlichen Fingerbereichen hinsichtlich dessen Aufbau in Anbetracht der Unterschiede zwischen Daumen und restlichen Fingern angepasst ist. Insbesondere sind für ein erfindungsgemäßes Handschuhsystem für jeden der Fingerbereiche eine Sensoreinheit vorgesehen. Vorzugsweise sind diese mit einem gemeinsamen Überwurf und/oder gemeinsamen Datenverarbeitungseinrichtung verbunden.

Weitere Vorteile und Merkmale der Erfindung ergeben sich aus der nachstehenden Beschreibung eines besonders bevorzugten Ausführungsbeispiels anhand der beigefügten Figuren. Dabei zeigen:
- Fig. 1: eine Darstellung einer Hand;
- Fig. 2: eine Darstellung eines erfindungsgemäßes Handschuhsystems;
- Fig. 3: eine Darstellung eines erfindungsgemäßen Handschuhs;
- Fig. 4: eine Darstellung zur vorteilhaften Platzierung von Sensoren an einer Hand;
- Fig. 5: eine Darstellung eines erfindungsgemäßen Überwurfs;
- Fig. 6: eine Schnittdarstellung eines Fingerbereichs mit fixierter erfindungsgemäßer Sensoreinheit an und aufgenommenen Finger in dem Fingerbereich;
- Fig. 7: zwei Darstellungen einer erfindungsgemäßen Sensoreinheit; und
- Fig. 8: eine Darstellung eines durch ein erfindungsgemäßes Verfahren gebildeten erfindungsgemäßen Handschuhsystems mit noch nicht fixierter (Fig. 8A) bzw. fixierter Anordnung (Fig. 8B) einer Sensoreinheit bzw. deren Sensors.

Die Figuren sind dabei als rein schematisch aufzufassen und beschränken sich in ihrer Darstellung auf die wesentlichen und für das Verständnis der Erfindung wichtigen Bauteile. Einander entsprechende Bauteile tragen dabei dasselbe Bezugszeichen. Zur Unterscheidung mehrerer äquivalenter Bauteile "X" können diese als "X.1", "X2", "X.3" ... benannt und nummeriert sein.

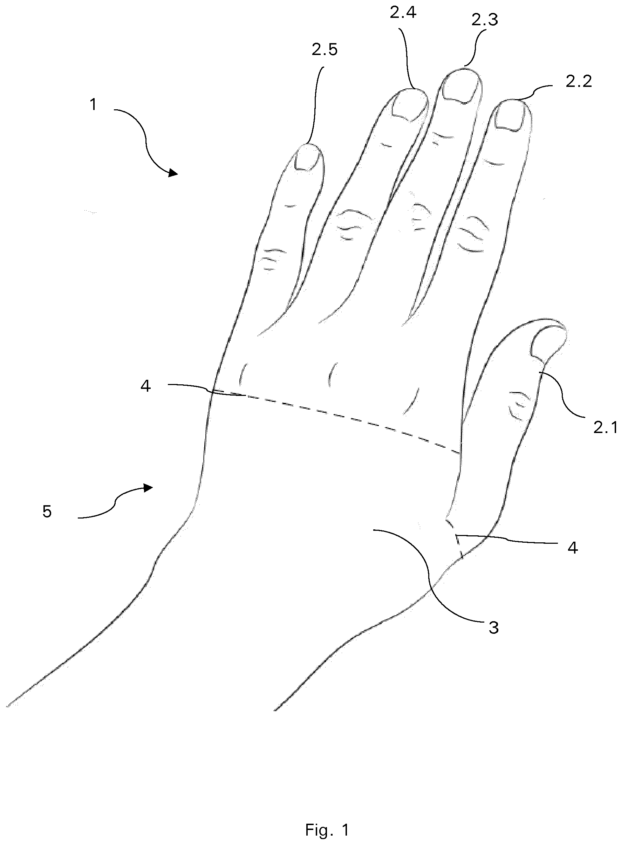

Figur 1 zeigt eine Hand 1, wobei diese in handrückenseitiger Ansicht gezeigt ist. Insbesondre kann an die Hand 1 ein erfindungsgemäßer Handschuh und/oder ein erfindungsgemäßes Handschuhsystem angeordnet werden. Die Hand 1 weist fünf Finger 2.1, 2.2., 2.3, 2.4, 2.5 (Finger 2.1 ist dabei ein Daumen) und eine Handrückenfläche 3 auf, wobei die Finger 2 unmittelbar an die Handrückenfläche 3 an einer gestrichelt dargestellten Grenzlinie 4 angrenzen. Die Grenzlinie 4 und eine Positionierung der Grenzlinie sind lediglich zum Zwecke eines Verständnisses der auf die hierin verwiesenen Bereiche der Hand 1 dargestellt und kann diese auch als Grenzbereich mit einer etwaigen Ausdehnung senkrecht zur gezeigten Linie ausgebildet sein.

Die Handrückenfläche 3 der Hand 1 kann sich im Sinne der vorliegenden Anmeldung gegebenenfalls auch über eine Handwurzel auf einen Unterarm, insbesondere bis zum Ellenbogen oder auf einen Oberarm erstrecken. Zudem erstreckt sich auf einer dem Betrachter der Figur 1 abgewandten Seite der Hand 1 eine Handinnenfläche. Eine Handaußenseite 5 der Hand 1 kann dabei definiert werden als aus der Handrückenfläche 3 und entsprechenden Teilflächen der Finger 2.1, 2.2., 2.3, 2.4, 2.5 gebildet.

Analog zur Handrückenfläche 3 der Hand 1 kann sich die Handinnenfläche auf einen Unterarm und beispielsweise bis zum Ellenbogen oder bis zum Oberarm erstrecken.

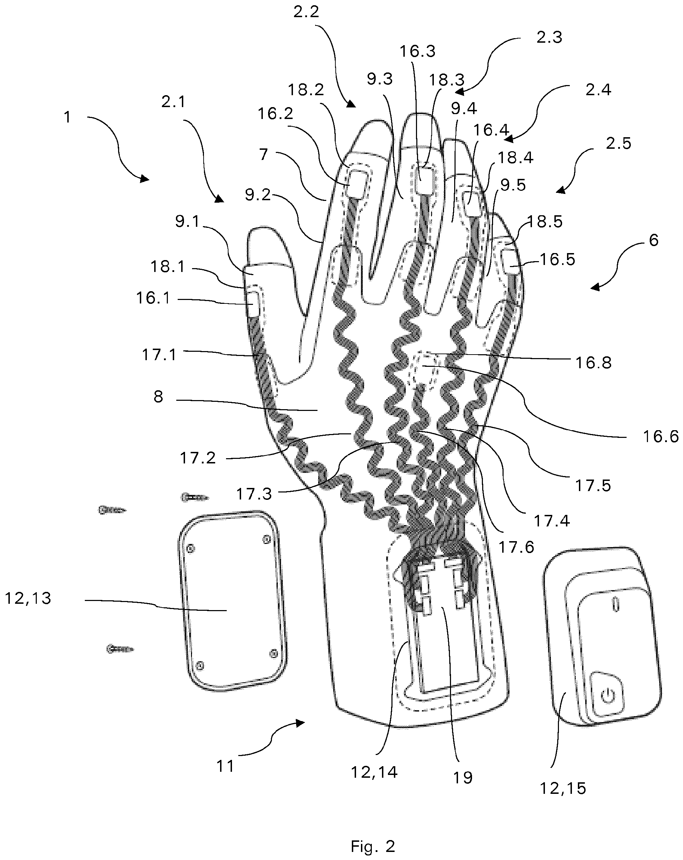

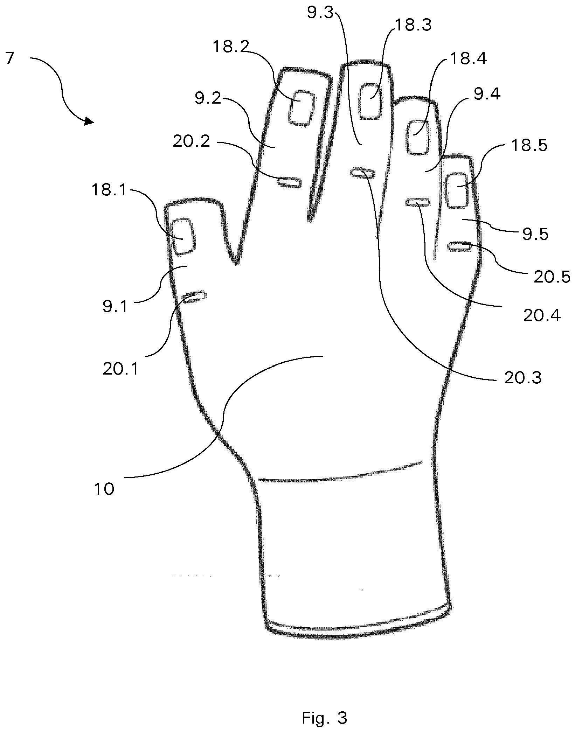

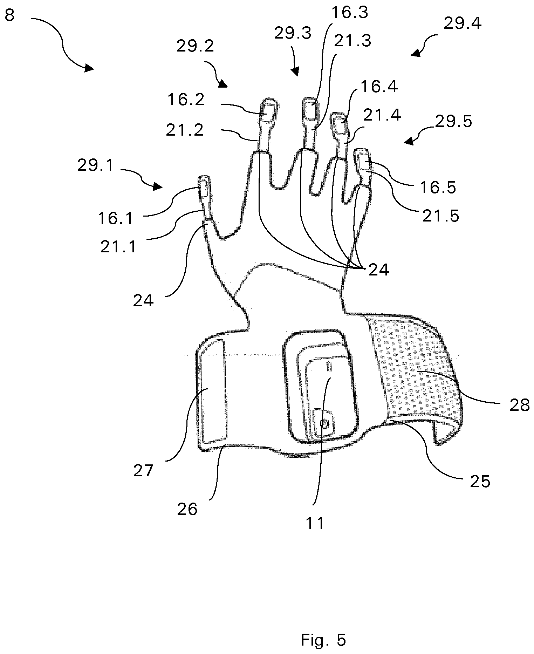

Figur 2 zeigt ein an einer Hand 1 angeordnetes erfindungsgemäßes Handschuhsystem 6. Das Handschuhsystem 6 weist einen erfindungsgemäßen Handschuh 7 und einen erfindungsgemäßen Überwurf 8 auf. Der Handschuh 7 wird dabei detaillierter in Figur 3, der Überwurf 8 in Figur 5 erläutert.

Sowohl der Überwurf 8 als auch der Handschuh 7 weisen Bereiche auf, die den in Figur 1 gezeigten Bereichen der Hand 1 entsprechen. Vorliegend ist hier ein Handschuh 7 mit fünf Fingerbereichen 9.1, 9.2, 9.3, 9.4, 9.5 zur Bedeckung bzw. Bekleidung der Finger 2.1, 2.2, 2.3, 2.4, 2.5 der Hand 1 durch Aufnahme der Finger 2.1, 2.2, 2.3, 2.4, 2.5 in den Fingerbereichen 9.1, 9.2, 9.3, 9.4, 9.5. Ebenso weist der Handschuh 7 eine Handrückenbereich 10 zur Bedeckung bzw. zur Bekleidung des entsprechenden Handrückenfläche 3 (zu sehen in Figur 3) der Hand 1 auf.

Am Überwurf 8 ist eine Datenverarbeitungseinrichtung 11 angeordnet. Die besteht aus einem Gehäuse 12, in welchem eine Hautplatine 19 aufgenommen ist. Das Gehäuse 12 ist dabei mehrteilig ausgebildet mit Gehäuseteilen 13, 14, 15 wobei das Gehäuseteil 14, insbesondere fest, mit dem Überwurf 8 verbunden, bevorzugt vernäht, ist, wobei die übrigen Gehäuseteile 13, 15 mit dem Gehäuseteil 14 verschraubt bzw. verschraubbar sind (gezeigt in Explosionsdarstellung). Am Überwurf 8 sind darüber hinaus Sensoren 16.1, 16.2, 16.3, 16.4, 16.5, 16.6 angeordnet. Die Sensoren 16.1, 16.2, 16.3, 16.4, 16.5 sind dabei jeweils einem Finger zugeordnet, während der Sensor 16.6 im Bereich der Handrückenfläche 3 bzw. des Handrückenbereichs 10 bzw. eines dazu korrespondierenden Bereichs des Überwurfs 8 angeordnet ist. Die Sensoren 16.1, 16.2, 16.3, 16.4, 16.5, 16.6 sind dabei über eine Vielzahl Kabel 17.1, 17.2, 17.3, 17.4, 17.5, 17.6 mit der Datenverarbeitungseinrichtung 11 bzw. der Hauptplatine 19 verbunden. Vorliegend gezeigt ist dabei eine Ausführungsform, in welcher je Sensor 16.1, 16.2, 16.3, 16.4, 16.5, 16.6 zur Verbindung mehrere Kabel, beispielsweise fünf Kabel vorgesehen sind. In der Datenverarbeitungseinrichtung 11 und dabei vorzugsweise im Gehäuseteil 15 kann dabei zudem eine Quelle zur Stromversorgung (nicht gezeigt) angeordnet sein, welche die Datenverarbeitungseinrichtung 11 bzw. Hauptplatine 19 und insbesondere auch die Sensoren 16.1, 16.2, 16.3, 16.4, 16.5, 16.6 mit Strom versorgen kann.

Im Handschuh 7 sind zudem zweite Öffnungen 18.1, 18.2, 18.3, 18.4, 18.5 in den Fingerbereichen 9.1, 9.2, 9.3, 9.4, 9.5 zur Befestigung der Sensoren 16.1, 16.2, 16.3, 16.4, 16.5 vorgesehen. Insbesondere sind die Sensoren in diesen Öffnungen, insbesondere lösbar, fixiert und insofern ortsfest an den jeweiligen Fingern 2.1, 2.2, 2.3, 2.4, 2.5 der Hand 1 angeordnet. Die Fixierung des Sensors 16.6 kann durch eine weitere Öffnung oder anderweitige Befestigungseinrichtung 18.6 im Handschuh 7 oder am und/oder im Überwurf 8 erfolgen, wobei eine Fixierung am und/oder im Überwurf 8 bevorzugt ist.

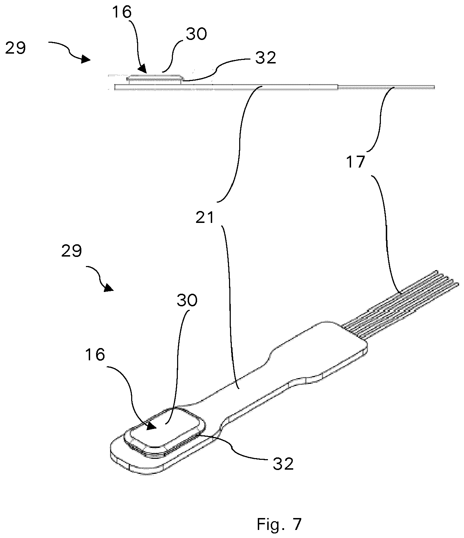

Figur 3 zeigt einen für ein Handschuhsystem 6 gemäß Figur 2 geeigneten Handschuh 7. Der Handschuh 7 weist eine Handrückenbereich 10 und in der gezeigten Ausführungsform fünf Fingerbereiche 9.1, 9.2, 9.3, 9.4, 9.5 zur mindestens teilweisen Bedeckung oder Bekleidung der Finger 2.2, 2.3, 2.4, 2.5 bzw. des Daumens 2.1 einer Hand 1 bzw. deren Aufnahme auf. Es sind jedoch auch Ausführungsformen mit einer geringeren Anzahl erfindungsgemäßer Fingerbereiche 9 denkbar. Die Fingerbereiche 9.1, 9.2, 9.3, 9.4, 9.5 verfügen jeweils über eine erste Öffnung 20.1, 20.2, 20.3, 20.4, 20.5. Die ersten Öffnungen 20.1, 20.2, 20.3, 20.4, 20.5 sind eingerichtet zur Durchführung von erfindungsgemäßen Sensoreinheiten bzw. Sensoren 16, deren Träger 21, sowie die die Sensoren 16 mit der Datenverarbeitungseinrichtung 11 verbindende Kabel 17 (eine erfindungsgemäße Sensoreinheit wird in Figur 7 gezeigt) auf eine Innenseite des jeweiligen Fingerbereichs 9.1, 9.2, 9.3, 9.4, 9.5 des Handschuhs 7 insbesondere bei Anordnung oder Festlegung eines hier nicht gezeigten Überwurfs 8.

Ferner sind in den Fingerbereichen 9.1, 9.2, 9.3, 9.4, 9.5 des Handschuhs 7 jeweils zweite Öffnungen 18.1, 18.2, 18.3, 18.4, 18.5 angeordnet und/oder ausgebildet. Diese zweiten Öffnungen 18.1, 18.2, 18.3, 18.4, 18.5 dienen der Aufnahme und Anordnung der Sensoreinheiten bzw. Fixierung der jeweiligen Sensoren 16 in den jeweiligen zweiten Öffnungen 18.1, 18.2, 18.3, 18.4, 18.5 zur ortsfesten Positionierung der Sensoren 16 am Handschuh 7. Die in Figur 3 nicht gezeigten Sensoreinheiten werden dabei insbesondere in Rahmen der Beschreibung zu Figur 7 näher beleuchtet, insbesondere hinsichtlich deren Form.

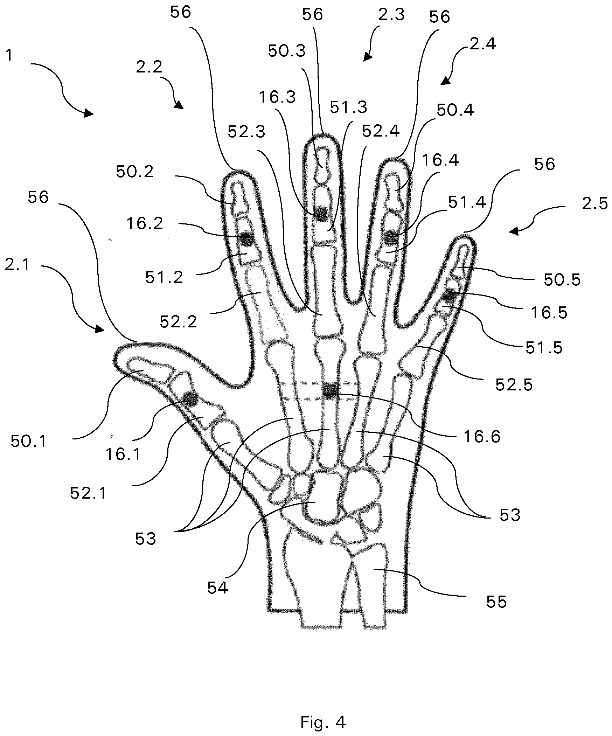

Figur 4 veranschaulicht eine bevorzugte Platzierung der Sensoren 16.1, 16.2, 16.3, 16.4, 16.5, 16.6 im Hinblick auf die Hand 1. Die Hand 1 ist dabei gezeigt in Aufsicht auf die Finger 2 und die Handrückenfläche 3. Gezeigt sind zudem schematisch dargestellten Knochensegmente 50, 51, 52, 53, 54, 55. Die Finger 2 haben dabei jeweils ein distales Fingerglied bzw. Fingerendglied 50, welche den Fingerkuppen 56 der Finger 2 am nächsten liegen. Angrenzend an die distalen Fingerglieder 50 findet sich ausgehend der Fingerkuppen 56 zunächst die medialen Fingerglieder bzw. Fingermittelglieder 51, gefolgt von den proximalen Fingergliedern bzw. Fingergrundgliedern 52. Die distalen, medialen und proximalen Fingerglieder 50, 51, 52 gehören dabei zu den Fingern 2 der Hand, wobei im Falle eines Daumens 2.1, ein mediales Fingerglied 51.1 nicht vorhanden ist. Die Knochensegmente 53 gehören zur Mittelhand, die Knochensegmente 54 zur Handwurzel und die Knochensegmente 55 stellen Unterarmknochen dar.

Im gezeigten vorteilhaften Positionierungskonzept, welches insbesondere in vorteilhaften Ausführungsformen der Erfindung Verwendung findet, werden die Sensoren 16 jeweils am oder im Bereich des dem distalen Fingerglied 50.1 nächsten Fingerglieds eines Fingers angeordnet. Im Falle eines Daumens ist dies das proximale Fingerglied 52, für die restlichen Finger 7 das mediale Fingerglied 51. Der Handschuh 7 und/oder das Handschuhsystem 6 sind vorteilhafterweise entsprechend geformt und/oder gearbeitet, dass diese ein derartiges Positionierungskonzept umsetzen, insbesondere die erfindungsgemäßen zweiten Öffnungen 18 entsprechend positioniert sind.

Der Handrückensensor 16.6 ist ferner auf dem Handrücken 3, insbesondere im Bereich der Mittelhand und insbesondere dort am Zeige-, Mittel- oder Ringfinger angeordnet (angedeutet durch den gestrichelten Umkreis, vorzugsweise, wie in Figur 4 gezeigt, im Bereich des Mittelfingers). Insbesondere ermöglicht der Handrückensensor 16.6, eine Relativbewegung der Sensoren 16.1, 16.2, 16.3, 16.4, 16.5 relativ zum Handrückensensor 16.6 zu betrachten, insbesondere derart die Relativbewegung der Finger 2 zur Mittelhand darstellen zu können.

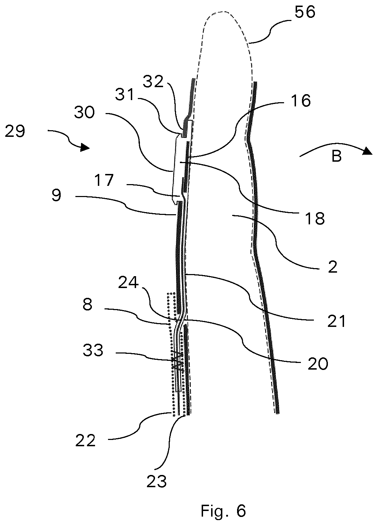

Figur 5 zeigt einen für ein Handschuhsystem 6 geeigneten Überwurf 8. Der Überwurf 8 ist im Wesentlichen durch ein Textil gebildet, welches im Wesentlichen aus vorzugsweise zwei Textillagen 22, 23 (zu sehen in Figur 6) gebildet ist. An dem Überwurf 8 ist eine Datenverarbeitungseinrichtung 11 befestigt. Diese ist durch in Figur 5 nicht näher gezeigte Kabel 17 mit erfindungsgemäßen Sensoreinheiten bzw. deren Sensoren 16.1, 16.2, 16.3, 16.4, 16.5 verbunden. Zwischen Datenverarbeitungseinrichtung 11 und Durchtrittsöffnungen 24 verlaufen die Kabel 17 im Wesentlich zwischen den zwei Textillagen 22, 23. Träger 21.1, 21.2, 21.3, 21.4, 21.5 der Sensoreinheiten 29.1, 29.2, 29.3, 29.4, 29.5 können fest mit dem Überwurf 8 verbunden sein. Dabei weist der Überwurf 8 Durchtrittsöffnungen 24 auf, in welchen die Träger 21.1, 21.2, 21.3, 21.4, 21.5 eingeführt sein können und/oder die Kabel 17.1, 17.2, 17.3, 17.4, 17.5 aus dem Überwurf hinausgeführt, dabei bevorzugt im Bereich der Durchtrittsöffnungen 24 bereits zumindest teilweise, besonders bevorzugt vollständig, in den Trägern 21.1, 21.2, 21.3, 21.4, 21.5 geführt und/oder festgelegt, sind.

Träger 21.1, 21.2, 21.3, 21.4, 21.5 und/oder Sensoren 16.1, 16.2, 16.3, 16.4, 16.5 sind dabei eingerichtet, insbesondere im Hinblick auf deren Formgebung, eine Fixierung bzw. ortsfeste Positionierung der Sensoreinheiten bzw. Sensoren 16.1, 16.2, 16.3, 16.4, 16.5 an einem erfindungsgemäßen, in Figur 5 nicht gezeigten Handschuh 7 zu ermöglichen, insbesondere wie in den Figuren 2, 6 und 8 gezeigt. Insbesondere sind die Träger 21 hierzu bevorzugt aus einem formspezifischen Silikonguss gebildet und bevorzugt die Sensoren 16 in den Trägern 21 eingegossen. Eine mögliche Form für einen solchen Träger 21 ist in Figur 7 gezeigt.

Der Überwurf 8 ist zudem derart ausgestaltet, dass dieser nach Bildung des erfindungsgemäßen Handschuhsystems 6, wie beispielsweise in Figur 2 gezeigt, den Handrückenbereich 10 (vgl. Figur 3) bzw. die Handrückenfläche 3 (vgl. Figur 1) zumindest teilweise überdeckt.

Ferner kann der Überwurf 8 noch Fixierungsmittel 25, 26, 27, 28 aufweisen, welche einer Fixierung des Überwurfs 8 an der Hand 1 im Bereich der Handwurzel und/oder am Unterarm des Trägers des Handschuhsystems 6 dient. Bevorzugt sind dabei Umlageflächen 25 und 26 eingerichtet, den Unterarm des Trägers umschließen zu können, wobei die Umlagefläche 25 vorzugsweise zumindest teilweise aus einem atmungsaktiven Textil 28, beispielsweise einem Mesh, gebildet ist und/oder ein solches aufweist, während ein handelsüblicher Klettverschluss 27 an einer Oberfläche zum festen, dennoch lösbaren Verschließen dient. Entsprechend ist eine Oberfläche der Umlagefläche 25, insbesondre auf der zum atmungsaktiven Textil 28 angewandten Seite, mit einer vorliegend nicht explizit gezeigten klettbaren Struktur versehen. Dadurch kann der Überwurf weitestgehend ortsfest am Unterarm bzw. der Hand 1 des Trägers des Handschuhsystems 6 festgelegt werden.

Figur 6 zeigt eine Schnittdarstellung eines an einem Finger 2 angelegten Fingerbereichs 9 eines Handschuhs 7, sowie einen Ausschnitt eines Überwurfs 8 und eine Sensoreinheit 29, welche in dem Fingerbereich 9 ortsfest festgelegt ist.

Der Fingerbereich 9 ist dabei fingerlos gestaltet, d.h., dass die Fingerkuppe 56 offen liegt und nicht von dem Fingerbereich 9 umschlossen ist.

Die Sensoreinheit weist dabei einen Träger 21 auf, welcher eine Auswölbung 30 mit einem Rücksprung 31 aufweist. Der Sensor 16 ist in dem Träger eingelassen. Die Auswölbung 30 ist in der zweiten Öffnung 18 aufgenommen. Dabei umschließt ein Rand 32 der zweiten Öffnung 16 den Rücksprung 31 bzw. greift in diesen ein. Ferner ist der Träger 21, insbesondere innenseitig anliegend an den Fingerbereich 9, zwischen Fingerbereich 9 und Finger 2 festgelegt.

Vom Senor 16 führt das Kabel 17 zu einer, hier nicht gezeigten Datenverarbeitungseinrichtung 11 und tritt durch die erste Öffnung 20. An der Öffnung 20 ist die Durchtrittsöffnung 24 des Überwurfs 8 platziert, durch welche das Kabel 17 in den Überwurf 8 zwischen die Textillagen 22 und 23 geführt ist. Insbesondere ist/sind das Kabel 17, insbesondere geführt im Träger 21, und/oder der Träger 21 an der Naht 33 mit dem Überwurf 8 vernäht, sodass das Kabel 17 und/oder der Träger 21 nicht aus dem Überwurf 8 rutschen kann bzw. Durchtrittsöffnung 24 und Sensor 16 passend beabstandet sind, insbesondere entsprechend des Abstands zwischen erster Öffnung 20 und zweiter Öffnung 18 des Fingerbereichs 9.

In gezeigter Anordnung werden sowohl das Kabel 17 als auch der Sensor 16 von äußeren Einflüssen bestmöglich abgeschirmt und sind somit bestmöglich geschützt. Ferner ist die gezeigte Anordnung geeignet, eine Bewegung des Fingers, beispielsweise in Richtung B, insbesondere beispielsweise ein Greifen, erfassen und durch geeignete Sensordaten, insbesondere Positions- und/oder Bewegungsdaten, wiedergeben zu können. Bevorzugt kann durch diese Bewegung der Träger 21 gebogen werden, wobei der Sensor 16 ortsfest an dem Finger 2 verbleibt, insbesondere im Bereich des medialen Fingerglieds 51. Hierzu ist der Träger 21 vorzugsweise aus elastischem Material, vorzugsweise aus Silikon, gefertigt.

Figur 7 zeigt zwei Ansichten einer erfindungsgemäßen Sensoreinheit 29, insbesondere zur Verwendung in einem, insbesondere erfindungsgemäßen, Handschuhsystem 6. Die Sensoreinheit 29 weist dabei einen Träger 21 auf mit einer Auswölbung 30 auf. Der Sensor 16 ist dabei im Bereich der Auswölbung 30 angeordnet. An der Auswölbung 30 ist zudem ein Rücksprung 31, vorzugsweise umlaufend, angeordnet, welcher eingerichtet, insbesondere wie in Figur 6 gezeigt, einen Rand 32 einer zweiten Öffnung 20 eines, insbesondere erfindungsgemäßen, Handschuhs 7 zu umschließen bzw. zum Eingriff des Rands 32 in den Rücksprung 31.

Die Sensoreinheit 29 verfügt des weiteren über ein oder mehrere Kabel 17 (gezeigt ist eine Anordnung mit fünf Kabeln 17) welche zumindest teilweise innerhalb des Trägers 21 angeordnet sind und eingerichtet sind den Sensor 16 mit einer Datenverarbeitungseinrichtung 11 zu verbinden, insbesondere zur Übertragung von Sensordaten, insbesondere Positions- und/oder Bewegungsdaten, an diese.

Der Träger 21 kann dabei den eingelassenen Sensor 16 und Teile der Kabel 17 vor Umwelteinflüssen wie Schmutz oder Feuchtigkeit schützen. Durch das Einlassen des Sensors wird dieser in Figur 7 durch den Träger 21 bzw. dessen Auswölbung 30 überdeckt, sodass dieser nicht unmittelbar illustriert ist. Vorzugsweise kann der Träger durch einen formspezifischen Silikonguss gebildet sein, wodurch auch eine mechanische Überbelastung des mindestens einen Kabels 17 bzw. einer Verbindung des mindestens einen Kabels 17 mit dem Sensor 16 reduzierbar ist.

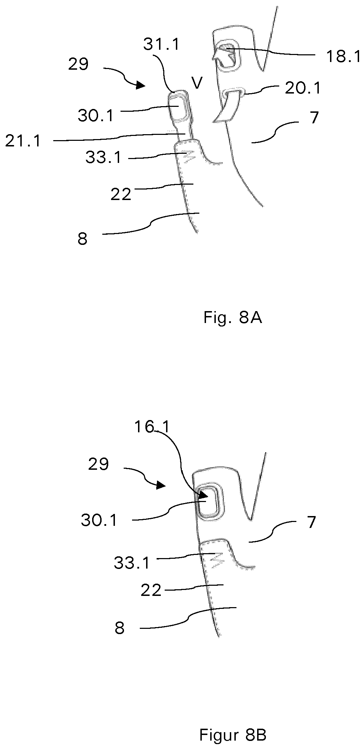

Die Figuren 8A und 8B veranschaulichen die Bildung eines erfindungsgemäßen Handschuhsystems 6. Zur Veranschaulichung ist dabei lediglich der Bereich des Daumens 2.1 gezeigt. Figur 8A zeigt dabei eine Ausgangsposition, in welcher die Sensoreinheit 29.1 noch nicht im Handschuh 7 festgelegt ist. Der eingefügte Pfeil V zeigt dabei an, wie die Sensoreinheit 29.1 durch die ersten Öffnung 20.1 auf die Innenseite des Handschuhs 7 zu führen ist zur Festlegung der Auswölbung 30.1 bzw. des Sensors 16.1 in der zweiten Öffnung 18.1 Dabei wird der Träger 21.1 und das darin festgelegte Kabel 17.1 durch die erste Öffnung 20.1 geführt und im Anschluss die Auswölbung 30.1 in der zweiten Öffnung 18.1 angeordnet und insbesondere durch Eingriff des Rands 32.1 in den Rücksprung 31.1 der Auswölbung 30.1 fixiert. Der Träger 21.1 und/oder das Kabel 17.1, insbesondere geführt im Träger 21.1 ist/sind zudem mittels der Naht 33.1 an dem Überwurf 8 festgelegt.

Figur 8B zeigt den Zustand des Handschuhsystems 6 nach vorstehend beschriebener Fixierung der Sensoreinheit 29.1. Insbesondere wird gezeigt, dass die Auswölbung 30.1, insbesondere im Bereich des Rücksprungs 31.1, bevorzugt formschlüssig, am Rand 32.1 der zweiten Öffnung 18.1 anliegt. Insbesondere ist der Rand 32.1 hierzu verstärkt, um einer Abnutzung und einem Verlust der Formgebung der zweiten Öffnung 18.1 entgegenzuwirken.

Gezeigt ist zudem, dass der Überwurf 8, insbesondere dessen Textillage 22, die erste Öffnung 20.1 überdeckt. Insbesondere wird das Kabel 17.1 so vollständig überdeckt und ist dadurch bestmöglich vor äußeren Einflüssen geschützt. Insbesondere verhindert die Naht 33.1, dass das Kabel 17.1 und/oder der Träger 21.1 aus dem Überwurf 8 bzw. den Textillagen 22, 23, insbesondere ungewollt, hinausgezogen werden kann/können, insbesondere derart, dass das Kabel 17.1 dann frei liegt und dadurch gegenüber äußeren Einflüssen insbesondere ungeschützt wäre, und/oder legt das Kabel 17.1 und/oder den Träger 21.1 an und/oder im Überwurf und/oder zwischen den Textillagen 22, 23 fest und/oder fixiert das Kabel 17.1 und/oder den Träger 21.1 an und/oder im Überwurf und/oder zwischen den Textillagen 22, 23.

## Patentansprüche

1. Handschuh zur Aufnahme mindestens einer Sensoreinheit und/oder mindestens eines Sensors aufweisend einen Handinnenflächenbereich, einen Handrückenbereich und mindestens einen Fingerbereich,
wobei der Handinnenflächenbereich, der Handrückenbereich und der mindestens eine Fingerbereich jeweils eine Innenseite und eine Außenseite aufweisen,
wobei der Handinnenflächenbereich und der Handrückenbereich gemeinsam einen ersten Aufnahmeraum eingerichtet zur Aufnahme einer Mittelhand und insbesondere einer Handwurzel aufspannen, wobei der erste Aufnahmeraum durch die Innenseiten des Handinnenflächenbereichs und des Handrückenbereichs zumindest teilweise begrenzt ist,
wobei sich die Innenseite des mindestens einen Fingerbereich in einem Übergangsbereich an die Innenseite des Handinnenflächenbereich und/oder Handrückenbereichs anschließt,
wobei der mindestens eine Fingerbereich mindestens einen zweiten, durch die Innenseite des mindestens einen Fingerbereichs zumindest teilweise begrenzten Aufnahmebereich, insbesondere Aufnahmeraum, eingerichtet zur Aufnahme eines Fingers aufspannt,
wobei in dem mindestens einen Fingerbereich eine erste und eine zweite Öffnung angeordnet sind, wobei die erste und zweite Öffnung beabstandet voneinander entlang einer Längserstreckung des mindestens einen Fingerbereichs angeordnet sind und die erste Öffnung eine geringe Distanz zum Übergangsbereich als die zweite Öffnung aufweist,
wobei die erste Öffnung eingerichtet ist zum Durchführen einer Sensoreinheit und/oder eines Sensors und/oder eines Kabels und/oder eines, insbesondere den Sensor und/oder das Kabel umfassenden, Trägers von der Außenseite zur Innenseite des mindestens einen Fingerbereichs und wobei die zweite Öffnung eingerichtet ist zur Aufnahme und Fixierung zumindest eines Teils der Sensoreinheit und/oder des Senors in der zweiten Öffnung.

2. Handschuh nach Anspruch 1, wobei die zweite Öffnung zumindest teilweise, insbesondere umlaufend, von einem verstärkten Rand umgeben ist, wobei der verstärkte Rand insbesondere durch eine Folierung gebildet ist.

3. Handschuh nach einem der vorstehenden Ansprüche, wobei die zweite Öffnung und/oder der verstärkte Rand eingerichtet ist/sind, zur Fixierung der Sensoreinheit und/oder des Sensors durch Eingriff in einen Rücksprung der Sensoreinheit und/oder des Sensors und/oder einen Vorsprung der Sensoreinheit und/oder des Sensors zu hintergreifen und/oder von dem Vorsprung der Sensoreinheit und/oder des Sensors hintergriffen zu werden.

4. Handschuh nach einem der vorstehenden Ansprüche, wobei der mindestens eine zweite Aufnahmebereich, insbesondere Aufnahmeraum, zumindest zwei Teilbereiche, insbesondere Teilräume, umfasst, wobei jeder Teilbereich, insbesondere Teilraum, zur Überspannung und/oder Aufnahme eines distalen, medialen oder proximalen Fingergliedes eingerichtet ist, wobei jeder Teilbereich, insbesondere Teilraum, von einer Teilfläche der Innenseite des mindestes eine Fingerbereich zumindest teilweise begrenzt ist,
wobei die erste Öffnung in der Teilfläche des mindestens einen Fingerbereichs angeordnet ist, welcher den zur Überspannung und/oder Aufnahme des proximalen Fingergliedes eingerichteten Teilbereich, insbesondere Teilraum, zumindest teilweise begrenzt und/oder
wobei die zweite Öffnung in der Teilfläche des mindestens einen Fingerbereichs angeordnet ist, welcher den zur Überspannung und/oder Aufnahme des medialen oder proximalen Fingergliedes eingerichteten Teilbereich, insbesondere Teilraum, zumindest teilweise begrenzt.

5. Handschuh nach einem der vorstehenden Ansprüche, wobei der Handschuh als fingerloser Handschuh ausgeführt ist und/oder wobei der mindestens eine Fingerbereich keinen Teilraum eingerichtet zur Aufnahme eines distalen Fingergliedes aufweist und/oder wobei der mindestens eine Fingerbereich eine, insbesondere endständige, dritte Öffnung zum Austritt eines Fingers aus dem Handschuh und/oder des mindestens einen Fingerbereichs aufweist.

6. Sensoreinheit zur Einbringung in eine Öffnung eines Handschuhs, insbesondere in eine zweiten Öffnung nach einem der vorstehenden Ansprüche, aufweisend mindestens einen Sensor, einen Träger und mindestens ein Kabel eingerichtet zur Verbindung des Sensors mit einer Datenverarbeitungseinrichtung, insbesondere zur Übertragung von vom Sensor erfasster Sensordaten, insbesondere Positions- und/oder Bewegungsdaten,
wobei der mindestens eine Sensor in und/oder an dem Träger festgelegt ist,
wobei zumindest ein Teil des mindestens einen Kabels an und/oder in dem Träger festgelegt ist,
wobei der Träger an seiner Oberfläche eine Auswölbung aufweist, wobei die Auswölbung an einer Kontaktfläche zwischen Träger und Auswölbung eine erste flächige Ausdehnung aufweist und die Oberfläche des Trägers eine zweite flächige Ausdehnung, insbesondere beinhaltend die Kontaktfläche, aufweist, wobei die zweite flächige Ausdehnung an zumindest zwei einander gegenüberliegenden Seiten der Auswölbung, insbesondere umlaufend um die Auswölbung, breiter ist als die erste flächige Ausdehnung
wobei der Sensor im Bereich der Auswölbung angeordnet ist und/oder die Auswölbung den Sensor umfasst und/oder an mindestens vier Seiten umgibt und/oder durch den Sensor ausgebildet ist.

7. Sensoreinheit nach Anspruch 6, wobei der Träger eingerichtet ist, zumindest teilweise an einer Innenseite eines Fingerbereichs des Handschuhs, insbesondere zur Fixierung des Trägers an der Innenseite und/oder zur Fixierung der Auswölbung und/oder des mindestens einen Sensors in der Öffnung, insbesondere zweiten Öffnung, anzuliegen, insbesondere in einem Teilbereich, insbesondere Teilraum, des Fingerbereichs eingerichtet zur Aufnahme eines medialen und/oder proximalen Fingerglieds; und/oder wobei an der Auswölbung und/oder dem Sensor ein, vorzugsweise umlaufender, Vorsprung angeordnet ist und/oder wobei die Auswölbung und/oder der Sensor einen Rücksprung aufweist, wobei der Vorsprung eingerichtet ist, einen Rand, insbesondere verstärkten Rand, insbesondere der Öffnung, insbesondere zweiten Öffnung, zu hintergreifen und/oder von dem Rand, insbesondere verstärkten Rand, der Öffnung, insbesondere zweiten Öffnung, hintergriffen zu werden und/oder wobei der Rücksprung eingerichtet ist zur Aufnahme und/oder Eingriff des Rands, insbesondere verstärkten Rands, der Öffnung, insbesondere zweiten Öffnung, in den Rücksprung, insbesondere zur Fixierung der Auswölbung und/oder des mindestens einen Sensors in der Öffnung, insbesondere zweiten Öffnung.

8. Sensoreinheit nach einem der Ansprüche 6 oder 7, wobei der Träger und/oder die Auswölbung und/oder der Vorsprung aus einem flexiblen und/oder isolierendem Material, insbesondere einem Silikon, gefertigt ist und/oder wobei der mindestens eine Sensor in dem Träger und/oder in der Auswölbung eingelassen, insbesondere eingegossen, ist und/oder zumindest ein Teil des mindestens einen Kabels in dem Träger eingelassen, insbesondere eingegossen, ist und/oder wobei der Träger als Form- und/oder Spritzguss hergestellt ist.

9. Überwurf mit mindestens einer Sensoreinheit, insbesondere mehreren Sensoreinheiten, insbesondere 3 oder mehr Sensoreinheiten, vorzugsweise 5 Sensoreinheiten, nach einem der Ansprüche 6 bis 8, wobei der Überwurf mit einem Handschuh, insbesondere Handschuh nach einem der Ansprüche 1 bis 5, insbesondere lösbar, verbindbar ist,
wobei der Überwurf insbesondere eingerichtet ist, einen Handschuh, insbesondere einen Handschuh nach einem der Ansprüche 1 bis 5, insbesondere einen, insbesondere den, Handrückenbereich, des Handschuhs, zumindest teilweise zu überdecken, wobei das mindestens eine Kabel und/oder der Träger der mindestens einen Sensoreinheit zumindest teilweise an und/oder in dem Überwurf festgelegt ist und/oder zumindest teilweise durch den Überwurf geführt wird.

10. Überwurf nach Anspruch 9, wobei der Überwurf zwei Textillagen aufweist, wobei das mindestens eine Kabel und/oder der Träger zumindest teilweise im Zwischenraum zwischen den Textillagen angeordnet und/oder festgelegt ist.

11. Sensoreinheit nach einem der Ansprüche 6 bis 8 oder Überwurf nach einem der Ansprüche 9 oder 10, zusätzlich aufweisend eine Datenverarbeitungseinrichtung zur Verarbeitung der vom Sensor erfassten Sensordaten, insbesondere Positions- und/oder Bewegungsdaten, wobei die Datenverarbeitungseinrichtung über das mindestens eine Kabel mit dem mindestens einen Sensor, insbesondere lösbar, verbunden und/oder verbindbar ist, wobei die Datenverarbeitungseinrichtung insbesondere lösbar am Überwurf festgelegt ist, insbesondere an und/oder mit dem Überwurf, insbesondere lösbar, verschraubt.

12. Handschuhsystem aufweisend einem Handschuh nach einem der Ansprüche 1 bis 5 und mindestens eine Sensoreinheit nach einem der Ansprüche 6 bis 8, wobei insbesondere der mindestens eine Sensor und/oder die Auswölbung der Sensoreinheit in der zweiten Öffnung des mindestens einen Fingerbereichs angeordnet und/oder anordnenbar, insbesondere fixiert und/oder fixierbar, ist, insbesondere durch Eingriff des Rands, insbesondere verstärkten Rands, in den Rücksprung und/oder durch Hintergreifen des Rands, insbesondere verstärkten Rands, durch den Vorsprung,
wobei der Träger der mindestens einen Sensoreinheit zumindest teilweise an der Innenseite des mindestens einen Fingerbereichs, insbesondere formschlüssig, anliegt, insbesondere im zur Aufnahme des medialen und/oder proximalen Fingergliedes eingerichteten Teilbereichs, insbesondere Teilraums,
wobei das mindestens eine Kabel der mindestens einen Sensoreinheit durch die erste Öffnung des mindestens einen Fingerbereichs geführt ist, insbesondere derart, dass das mindestens eine Kabel von einer Außenseite des mindestens einen Finger- und/oder Handrückenbereichs durch die erste Öffnung auf eine Innenseite des mindestens einen Fingerbereichs geführt ist, insbesondere sodass ein Abschnitt des Kabels gelegen zwischen erster und zweiter Öffnung im mindestens einen zweiten Aufnahmebereich, insbesondere Aufnahmeraum, angeordnet ist und/oder an der Innenseite des mindestens einen Fingerbereichs zwischen erster und zweiter Öffnung, insbesondere innerhalb des Trägers, verläuft.

13. Handschuhsystem nach Anspruch 12, ferner aufweisend einen Überwurf nach einem der Ansprüche 9 bis 11, wobei der Überwurf, insbesondere lösbar, verbunden und/oder verbindbar mit dem Handschuh ist und der Überwurf den Handschuh, insbesondere das Handrückenteil, in einem Überdeckungsbereich zumindest teilweise überdeckt, wobei das mindestens eine Kabel zumindest teilweise zwischen Handrückenteil und Überwurf angeordnet und/oder festgelegt ist, insbesondere an dem Überwurf, und/oder zumindest teilweise in dem Überwurf angeordnet und/oder festgelegt ist, insbesondere zwischen zwei Textillagen des Überwurfs, und/oder durch den Überwurf geführt ist und/oder wird und/oder
wobei das mindestens einen Kabel insbesondere nach Austritt aus dem Überwurf, insbesondere aus den zwei Textillagen, und/oder nach Verlassen des Überdeckungsbereichs zwischen Überwurf und Handrückenbereich freiliegend und/oder innerhalb des Trägers verläuft, insbesondere ausgehend vom Überwurf von der Außenseite des Handrückenbereichs und/oder mindestens einen Fingerbereichs durch die erste Öffnung auf die Innenseite des mindestens einen Fingerbereichs verläuft, insbesondere so, dass ein Abschnitt des mindestens Kabels gelegen zwischen erster und zweiter Öffnung im mindestens einen zweiten Aufnahmebereich, insbesondere Aufnahmeraum, angeordnet ist und/oder an der Innenseite des mindestens einen Fingerbereichs zwischen erster und zweiter Öffnung verläuft.

14. Handschuhsystem nach einem der Ansprüche 12 oder 13, ferner aufweisend eine Datenverarbeitungseinrichtung zur Verarbeitung der vom Sensor erfassten Sensordaten, insbesondere Positions- und/oder Bewegungsdaten,
wobei die Datenverarbeitungseinrichtung über das mindestens eine Kabel mit dem mindestens einen Senor, insbesondere lösbar, verbunden und/oder verbindbar ist, insbesondere wobei die Datenverarbeitungseinrichtung, insbesondere lösbar, am Überwurf festgelegt ist, und/oder aufweisend eine Quelle, insbesondere in Form einer Batterie und/oder eines wiederaufladbaren Akkus, zur Versorgung der Datenverarbeitungseinrichtung und/oder des mindestens einen Sensors mit Storm.

15. Verfahren zur Bildung eines Handschuhsystems, insbesondere nach einem der Ansprüche 12 bis 14, umfassend die folgenden Schritte:
a) Bereitstellen eines Handschuhs nach einem der Ansprüche 1 bis 5 und mindestens einer Sensoreinheit nach einem der Ansprüche 6 bis 8;
b) Durchführen zumindest eines Teils des Trägers der mindestens einen Sensoreinheit und zumindest eines Teils des mindestens einen Kabels durch die erste Öffnung des mindestens einen Fingerteils des Handschuhs;
c) Anordnung des mindestens einen Sensors und/oder Auswölbung der mindestens einen Sensoreinheit in der zweiten Öffnung des Handschuhs und insbesondere Fixieren des mindestens einen Sensors und/oder Auswölbung der mindestens einen Sensoreinheit in der zweiten Öffnung, insbesondere durch Eingriff des Rands, insbesondere verstärkten Rands, in den Rücksprung und/oder durch Hintergreifen des Rands, insbesondere verstärkten Rands, durch den Vorsprung und/oder durch Anlegen des Trägers an der Innenseite des mindestens einen Fingerteils, insbesondere im zur Aufnahme eines distalen und/oder medialen Fingerglieds eingerichteten Teilbereich und/oder -raum des mindestens einen Fingerteils;
d) Optional Festlegen und/oder Fixieren eines Überwurfs nach einem der Ansprüche 9 bis 11 an dem Handschuh.
